# EUROPEAN PATENT SPECIFICATION

(11) **EP 1 246 699 B1**
(45) Date of publication and mention of the grant of the patent: **03.01.2007**
(21) Application number: 01946805.7
(22) Date of filing: 11.01.2001
(51) Int. Cl.: B01L 3/00

(54) **Cartridge comprising a biochip**
Patrone, die einen Biochip enthält
Cartouche comportant une biopuce

(30) Priority: 11.01.2000 US 175539 P; 03.11.2000 US 245840 P
(43) Date of publication of application: 09.10.2002
(73) Proprietor: Clinical Micro Sensors, Inc., Pasadena, CA 91105 (US)
(72) Inventor: DUONG, Hau, H., Los Angeles, CA 90004 (US); BLACKBURN, Gary, California 91741 (US); KAYYEM, Jon. F., Pasadena, California 91103 (US); O'CONNOR, Stephen D., California 91104 (US); OLSEN, Gary T., La Cresenta, California 91214 (US); PIETRI, Robert, California 91107 (US); TERBRUEGGEN, Robert H., Hermosa Beach, California 90254 (US)
(74) Representative: Kiddle, Simon John
(86) International application number: PCT/US2001/001150
(87) International publication number: WO 2001/054813

(56) References cited:
- WO-A-00/62931
- WO-A-97/41425
- WO-A-98/05424
- WO-A-98/12539
- WO-A-98/57159
- US-A- 5 519 635
- US-A- 5 741 462
- US-A- 5 866 345

## Description

### FIELD OF THE INVENTION

The invention is directed to devices that allow for simultaneous multiple biochip analysis. In particular, the devices are configured to hold multiple cartridges comprising biochips comprising arrays such as nucleic acid arrays, and allow for high throughput analysis of samples.

### BACKGROUND OF THE INVENTION

There are a number of assays and sensors for the detection of the presence and/or concentration of specific substances in fluids and gases. Many of these rely on specific ligand/antiligand reactions as the mechanism of detection. That is, pairs of substances (i.e. the binding pairs or ligand/antiligands) are known to bind to each other, while binding little or not at all to other substances. This has been the focus of a number of techniques that utilize these binding pairs for the detection of the complexes. These generally are done by labeling one component of the complex in some way, so as to make the entire complex detectable, using, for example, radioisotopes, fluorescent and other optically active molecules, enzymes, etc.

Other assays rely on electronic signals for detection. Of particular interest are biosensors. At least two types of biosensors are known; enzyme-based or metabolic biosensors and binding or bioaffinity sensors. See for example U.S. Patent No. 4,713,347; 5,192,507; 4,920,047; 3,873,267; and references disclosed therein. While some of these known sensors use alternating current (AC) techniques, these techniques are generally limited to the detection of differences in bulk (or dielectric) impedance.

There are a variety of nucleic acid biosensors currently known. These include nucleic acid biochips based on fluorescent detection; see for example materials developed by Affymetrix (including, but not limited to, 5,800,992, 5,445,934, 5,744,305, and related patents and materials), Nanogen (including, but not limited to, 5,532,129, 5,605,662, 5,565,322 and 5,632,957 and related patents and materials), Southern (EP 0 373 023 B1) and Synteni/lncyte (WO 95/35505 and related patents and materials).

Similarly, electronic detection of nucleic acids using electrodes is also known; see for example U.S. Patent Nos. 5,591,578; 5,824,473; 5,705,348; 5,780,234 and 5,770,369; U.S.S.N.s 08/873,598 08/911,589: and WO 98/20162; PCT/US98/12430; PCT/US98/12082: PCT/US99/10104: PCT/US99/01705, and PCT/US99/01703 and related materials.

However, to date none of these methods have been used in highly parallel systems to allow biochip multiplexing. Accordingly, it is an object of the present invention to provide devices and methods for multiplex analysis of biochips, particularly nucleic acid biochips.

### DETAILED DESCRIPTION OF THE DRAWINGS

Figure 1 is of the cartridge with the rubber gasket in the inlet port.
Figure 2 depicts a number of different reaction chamber geometries.

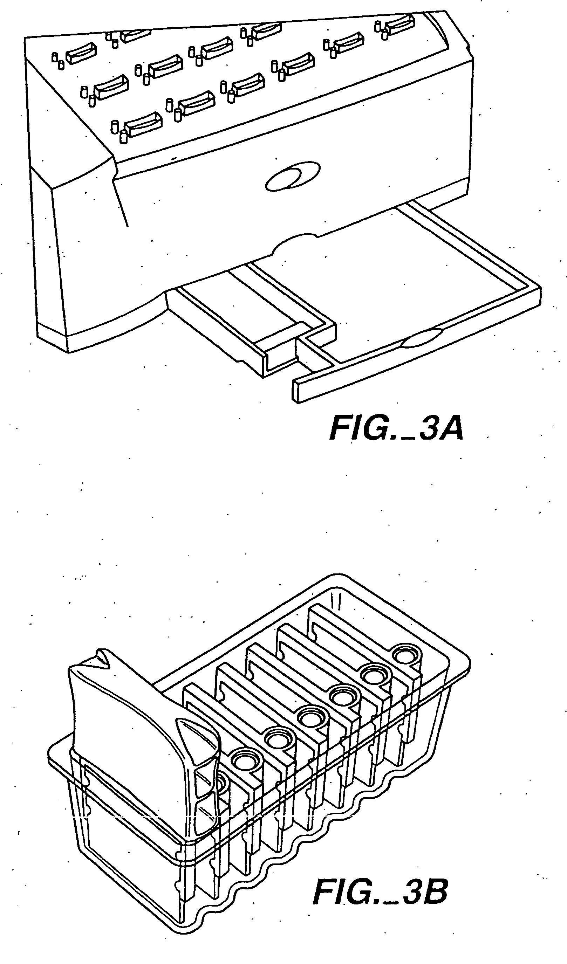

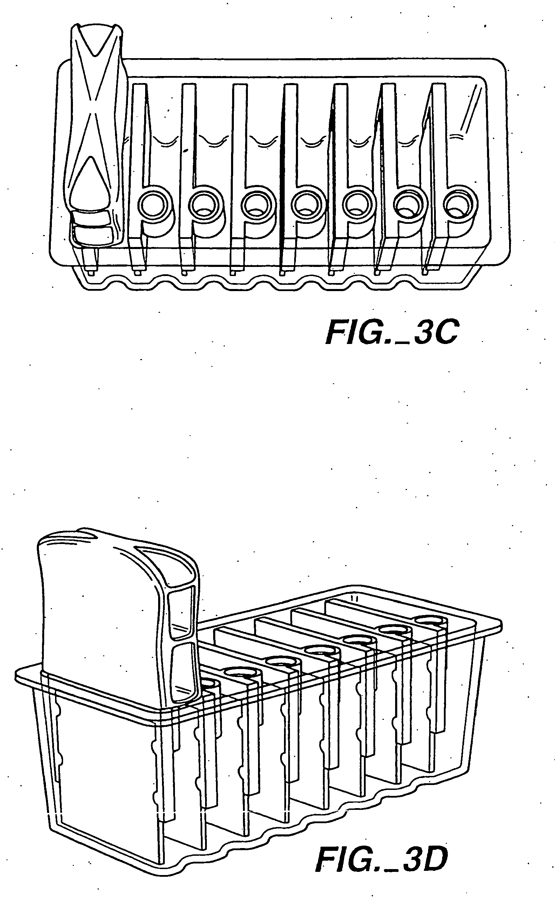

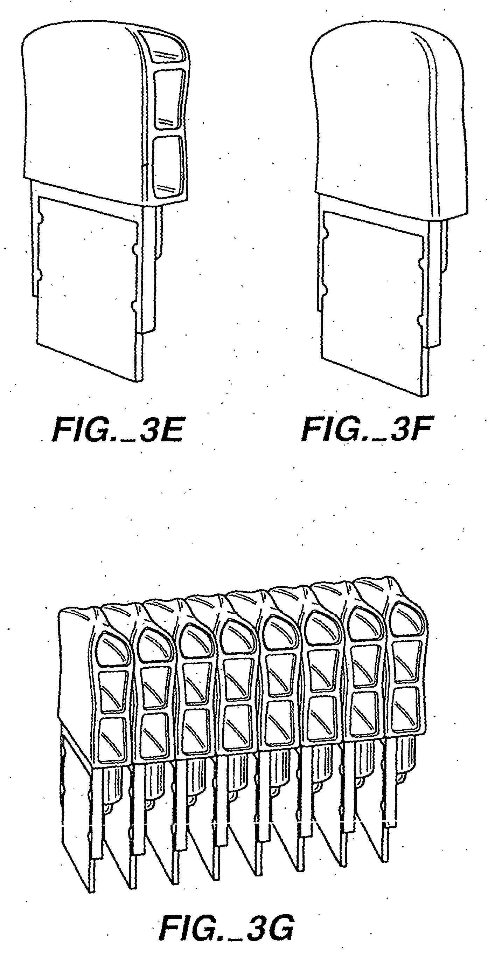

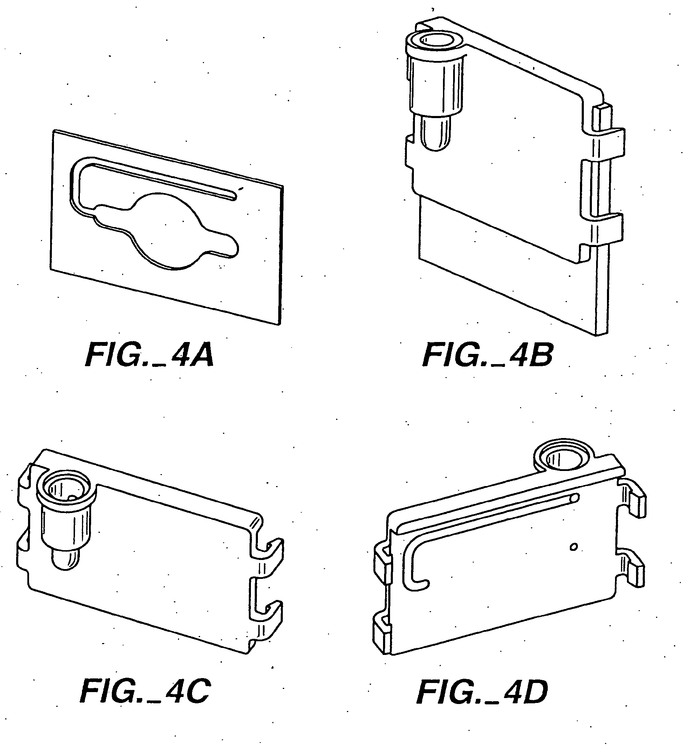

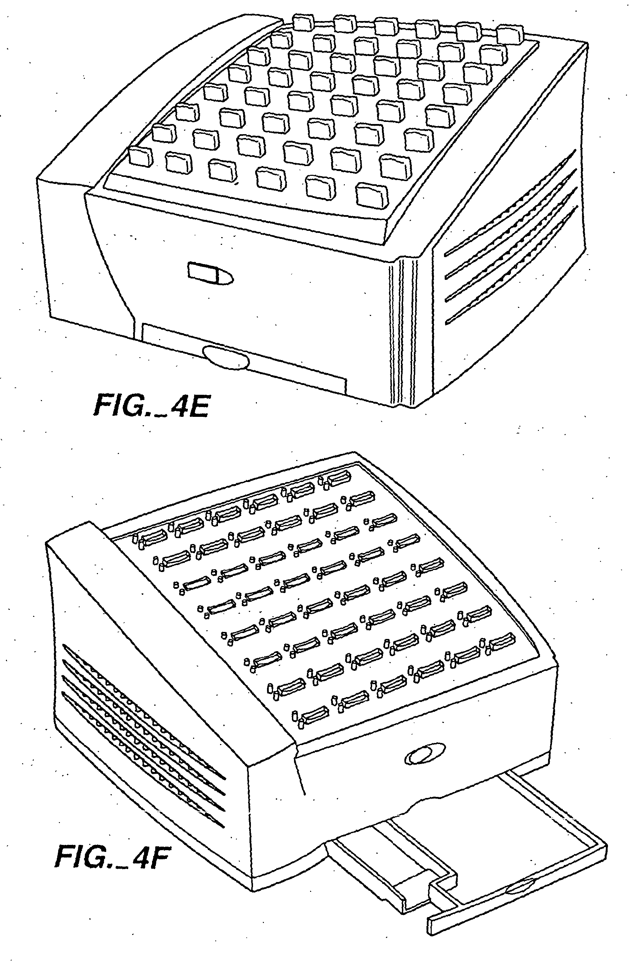

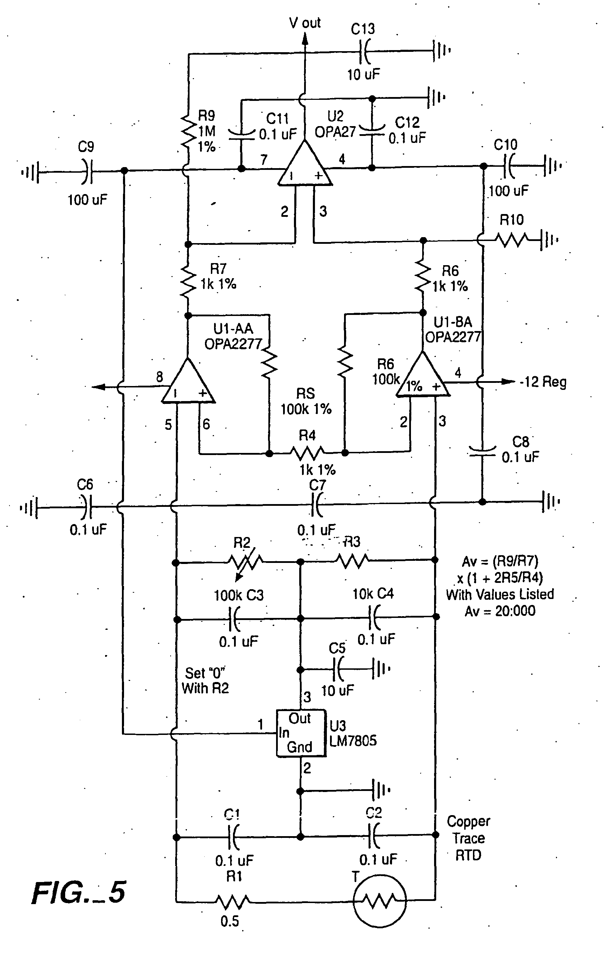

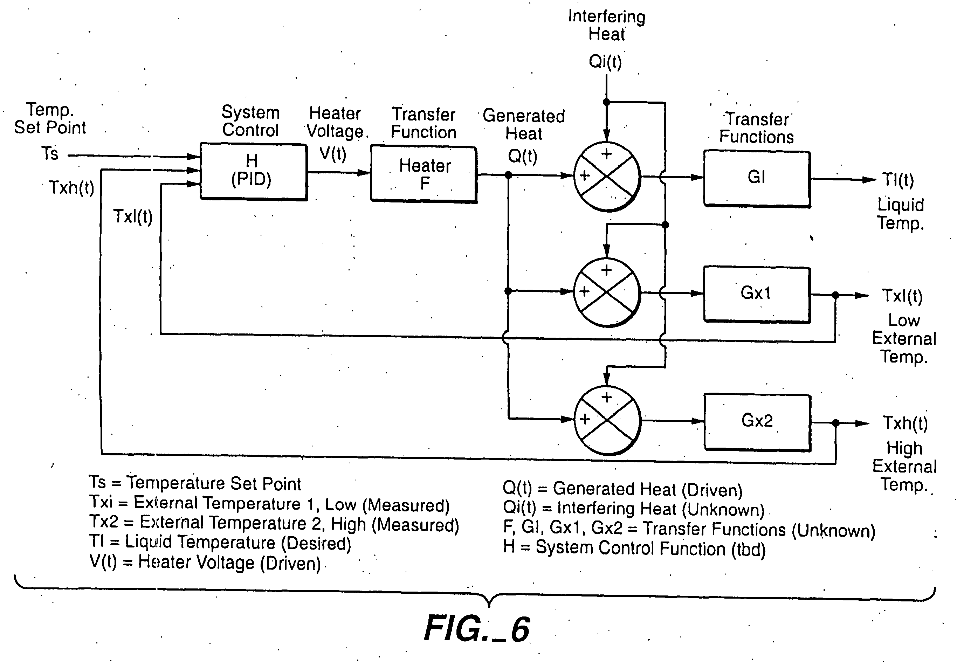

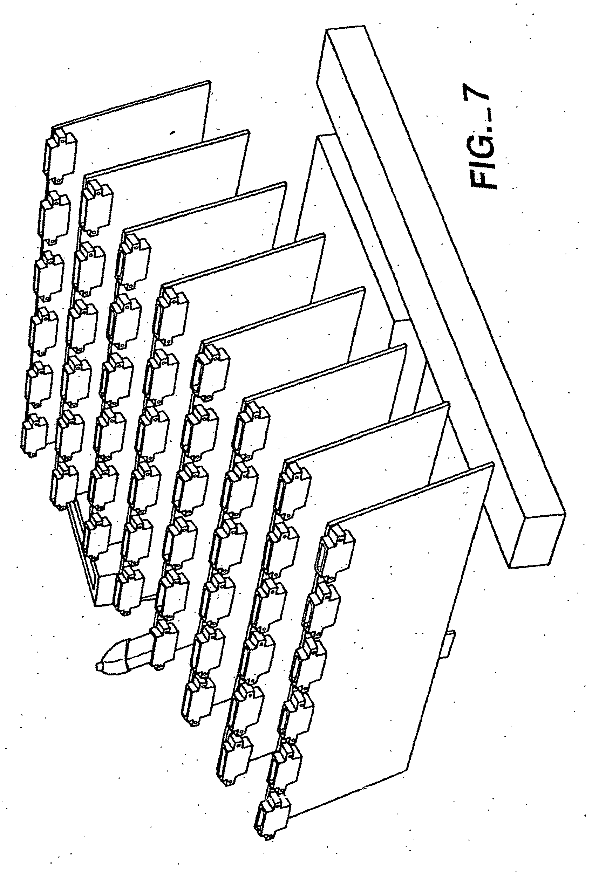

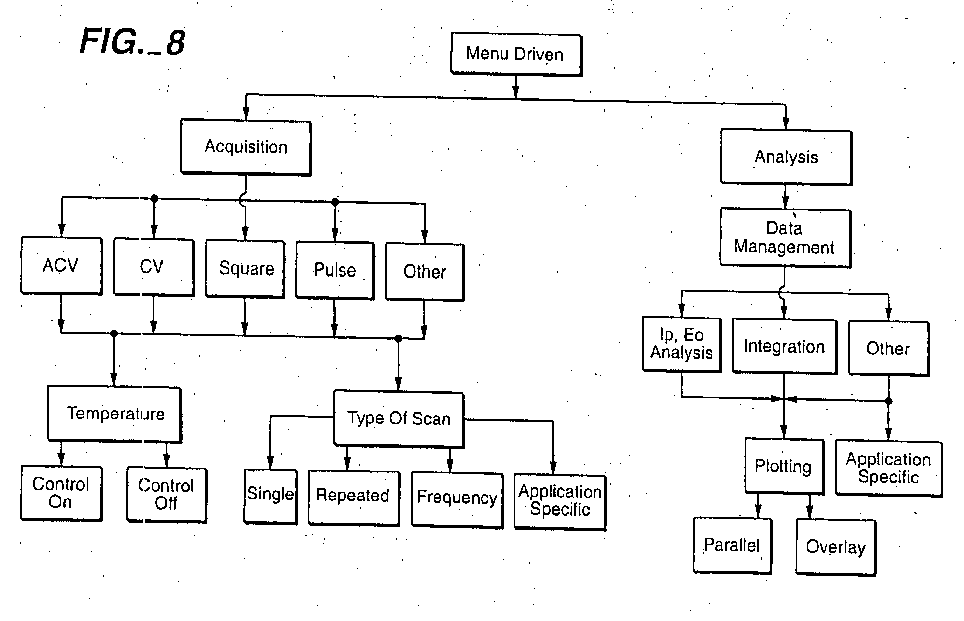

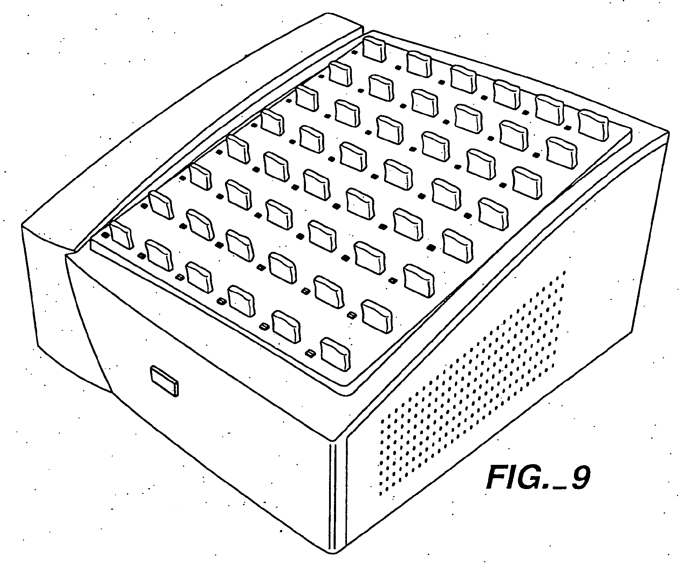

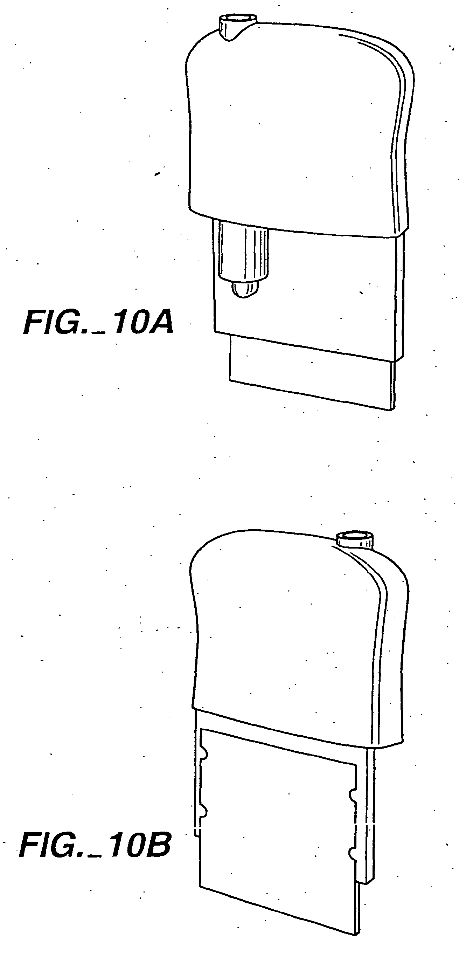

Figures 3-15 depict preferred embodiments of the invention.

### DETAILED DESCRIPTION

The present invention is directed to devices according to the claims. A number of samples (particularly patient samples) can be simultaneously analyzed, or multiple assays can be run on a single sample. The device may comprise a number of cartridge stations that are configured to receive the biochips, with different types of biochips allowing different types of components. The stations can include a wide variety of different components, including thermocontrollers, signaling systems, sensors for leak detection, alphanumeric displays, and detectors. Preferred embodiments include the use of biochips comprising electrodes that rely on electrochemical detection, and thus the devices and/or stations can comprise device boards and processors.

The biochip cartridges include substrates comprising the arrays of biomolecules, and can be configured in a variety of ways. For example, the chips can include reaction chambers with inlet and outlet ports for the introduction and removal of reagents. In addition, the cartridges can include caps or lids that have microfluidic components, such that the sample can be introduced, reagents added, reactions done, and then the sample is added to the reaction chamber comprising the array for detection.

Methods are directed to the detection of target analytes. By "target analyte" or "analyte" or grammatical equivalents herein is meant any molecule or compound to be detected and that can bind to a binding species, defined below. Suitable analytes include,but not limited to, small chemical molecules such as environmental or clinical chemical or pollutant or biomolecule, including, but not limited to, pesticides, insecticides, toxins, therapeutic and abused drugs, hormones, antibiotics, antibodies, organic materials, etc. Suitable biomolecules include, but are not limited to, proteins (including enzymes, immunoglobulins and glycoproteins), nucleic acids, lipids, lectins, carbohydrates, hormones, whole cells (including procaryotic (such as pathogenic bacteria) and eucaryotic cells, including mammalian tumor cells), viruses, spores, etc. Particularly preferred analytes are proteins including enzymes; drugs, cells ; antibodies; antigens; cellular membrane antigens and receptors (neural, hormonal, nutrient, and cell surface receptors) or their ligands.

As will be appreciated by those in the art, a large number of analytes may be detected using the present methods; basically, any target analyte for which a binding ligand, described below, may be made may be detected using the methods of the invention.

If required, the target analyte is prepared using known techniques. For example, the sample may be treated to lyse the cells, using known lysis buffers, electroporation, etc., with purification and/or amplification as needed, as will be appreciated by those in the art. When the target analyte is a nucleic acid, the target sequence may be amplified as required; suitable amplification techniques are outlined in PCT US99/01705, hereby expressly incorporated by reference. In addition, techniques to increase the amount or rate of hybridization can also be used; see for example WO 99/67425 and WO 01/35100.

The samples comprising the target analytes can be added to cartridges comprising the biochips as is outlined In greater detail below. By "cartridge" herein is meant a casing or housing for the biochip. As outlined herein, and as will be appreciated by those in the art, the cartridge can take on a number or configurations and can be made of a variety of materials. Suitable materials include, but are not limited to, fiberglass, teflon, ceramics, glass, silicon, mica, plastic (including acrylics, Polystyrene and copolymers of styrene and other materials, polypropylene, polyethylene, polybutylene, polycarbonate, polyurethanes, Teflon^{™}, and derivatives thereof, etc.), etc. Particularly preferred cartridge materials are plastic (including polycarbonate and polyproplylene) and glass.

As will be appreciated by those In the art, the cartridge as defined in the claims can comprise a number of components, including reaction chambers, inlet and outlet ports, heating elements including thermoelectric components, RF antennae, electromagnetic components, memory chips, sealing components such as gaskets, electronic components including interconnects, multiplexers, processors, etc.

The cartridge comprises a reaction chamber. Generally, the reaction chamber comprises a space or volume that allows the contacting of the sample to the biochip array. The volume of the reaction chamber can vary depending on the size of the array and the assay being done. In general, reaction chamber ranges from 1 nL to about 1 mL, with from about 1 to about 250 µl being preferred and from about 10 to about 100 µl being especially preferred. In some embodiments, to avoid the introduction of air bubbles into the reaction chamber (which can be disruptive to detection), the reaction chamber is less than the size of the sample to be introduced, to allow a slight overflow and thus ensure that the reaction chamber contains little or no air.

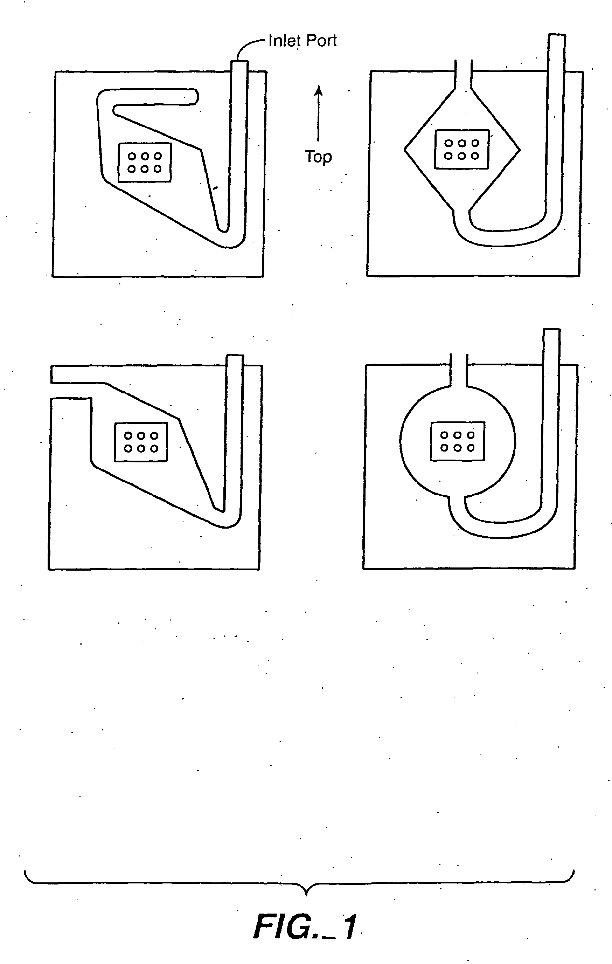

The reaction chamber of the cartridge comprises an inlet port for the introduction of the sample to be analyzed. The inlet port may optionally comprise a seal to prevent or reduce the evaporation of the sample or reagents from the reaction chamber. In a preferred embodiment (as depicted in Figure 1), the seal comprises a gasket, through which a pipette or syringe can be pushed. The gasket can be rubber or silicone or other suitable materials.

The reaction chamber can be configured in a variety of ways. The reaction chamber is configured to minimize the introduction or retention of air bubbles or other sample impurities. Thus for example, as depicted in Figure 1, assuming that the cartridge is held in an upright angle, the inlet port allows the flow of fluid sample into the "bottom" of the reaction chamber, to allow the escape of air or fluid through the "top" of the reaction chamber, through the outlet port. Thus the fluid sample flows up into the reaction chamber and contacts the array. Thus, the reaction chamber further comprises an outlet port to allow air or excess sample to exit the reaction chamber. In some embodiments, the outlet port vents to either a waste storage well, as is further described below, to an external surface of the chip or cartridge, or, in a preferred embodiment, back into the inlet port. Thus for example a preferred embodiment utilizes a system wherein the exit port vents to the inlet port, preferably above the point of loading. For example, when a pipette is used to load the cartridge, the tip of the pipette extends below the exit port, such that air from the exit port is not Introduced into the reaction chamber. In addition, the materials of the cartridge housing and biochip can be chosen to be similar in hydrophobicity or hydrophilicity, to avoid the creation of air bubbles.

In addition, in a preferred embodiment, the reaction chamber/inlet and/or outlet ports optionally include the use of valves. For example, a semi-permeable membrane or filter may be used, that preferentially allows the escape of gas but retains the sample fluid in the chamber. For example, porous teflons such as Gortex^{™} allow air but not fluids to penetrate.

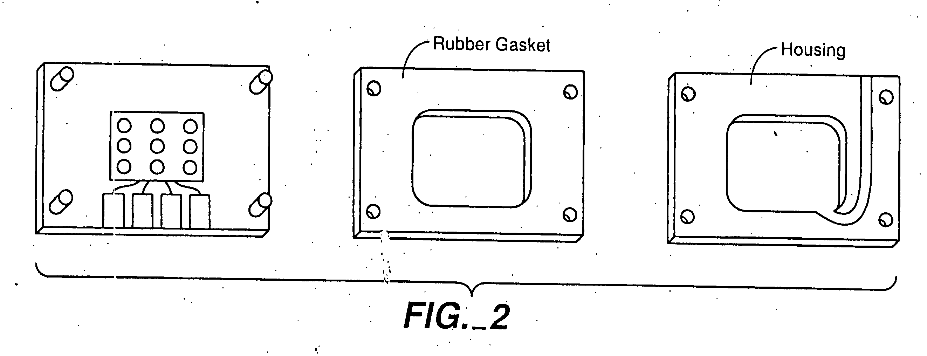

As will be appreciated by those in the art, there are a variety of reaction chamber geometries which can be used in this way. Generally having the intersection of the inlet port and the reaction chamber be at the "bottom" of the cartridge, with a small aperture, with the reaction chamber widening, is preferred. In addition, the "top" of the reaction chamber may narrow, as well. Several embodiments are depicted in Figure 2. Thus, preferred embodiments for the size and shape of the reaction chamber allow for smooth loading of the reaction chamber. Preferred embodiments utilize reaction chamber geometries that avoid the use of sharp corners or other components that serve as points for bubble formation.

In addition, in some embodiments, the reaction chamber can be configured to allow mixing of the sample. For example, when a sample and a reagent are introduced simultaneously or separately into the chamber, the inlet port and/or the reaction chamber can comprise weirs, channels or other components to maximize the mixing of the sample and reagent. In addition, as is outlined below, the reaction may utilize magnetic beads for mixing and/or separation.

In a preferred embodiment, the cartridge comprises a sealing mechanism to prevent leakage of the sample or reagents onto other parts of the substrate, particularly (in the case of electronic detection) onto electronic interconnects. As will be appreciated by those in the art, this may take on a variety of different forms. In one embodiment, there is a gasket between the biochip substrate comprising the array and the cartridge, comprising, sheets, tubes or strips. Alternatively, there may be a rubber or silicone strip or tube used; for example, the housing may comprise an indentation or channel into which the gasket fits, and then the housing, gasket and chip are clamped together. Furthermore, adhesives can be used to attach the gasket to the cartridge, for example, a double sided adhesive can be used; for example, silicone, acrylic and combination adhesives can be used to attach the gasket to the biochip, which is then clamped into the cartridge as described herein.

In some embodiments, the reaction chamber and biochip substrate are configured such that a separate sealing mechanism, is not required. For example, the biochip substrate can serve as one "half" of the reaction chamber, with the array on the inside, and the reaction chamber housing can serve as the other "half". Depending on the materials used, there may be an optional adhesive to attach the two. Alternatively, when there are arrays on both sides of the substrate, the housing may encompass the substrate.

Thus, in these embodiments, the volume of the reaction chamber can be set either by forming a well in the cartridge, such that the addition of the biochip substrate forms a reaction chamber around the array, or by using a flat cartridge and using a gasket of a defined depth, or by combinations of the two.

In a preferred embodiment, the cartridge comprises a cap or lid. The cap may be functional, as outlined below when it comprises microfluidic components. In addition, the cap may be designed for safety purposes, to prevent the leakage of biological materials or cross-contamination. As will be appreciated by those in the art, the cap can take on a wide variety of configurations. For example, in one embodiment, the cap merely seals the inlet port to prevent evaporation of the sample during the assay. In a preferred embodiment, the cap may comprise a number of additional elements for use in sample handling and reagent storage, to allow for a variety of different sample reactions. For example, a variety of microfluidic components can be built into the cap to effect a number of manipulations on a sample to ultimately result in target analyte detection or quantitation. See generally PCT US00/10903, and references outlined therein. These manipulations can include cell handling (cell concentration, cell lysis, cell removal, cell separation, etc.), separation of the desired target analyte from other sample components, chemical or enzymatic reactions on the target analyte, detection of the target analyte, etc. The devices of the invention can include one or more wells for sample manipulation, waste or reagents; microchannels (sometimes referred to as flow channels) to and between these wells, including microchannels containing electrophoretic separation matrices; valves to control fluid movement; on-chip pumps such as electroosmotic, electrohydrodynamic, or electrokinetic pumps. In addition, as outlined herein, portions of the internal surfaces of the device may be coated with a variety of coatings as needed, to reduce non-specific binding, to allow the attachment of binding ligands, for biocompatibility, for flow resistance, etc. These microfluidic caps can be made in a variety of ways, as will be appreciated by those in the art. See for example references described in PCT US00/10903, and references outlined therein.

When the cap of the cartridge is used as part of the assay, it may be configured to include one or more of a variety of components, herein referred to as "modules", that will be present on any given device depending on its use, and are connected as required by microchannels. These modules include, but are not limited to: sample Inlet ports; sample introduction or collection modules; cell handling modules (for example, for cell lysis, cell removal, cell concentration, cell separation or capture, cell growth, etc.); separation modules, for example, for electrophoresis, dielectrophoresis, gel filtration, ion exchange/affinity chromatography (capture and release) etc.; reaction modules for chemical or biological alteration of the sample, including amplification of the target analyte (for example, when the target analyte is nucleic acid, amplification techniques are useful, including, but not limited to polymerase chain reaction (PCR), oligonucleotide ligation assay (OLA); strand displacement amplification (SDA), and nucleic acid sequence based amplification (NASBA) and other techniques outlined in WO 99/37819 and PCT US00/19889), chemical, physical or enzymatic cleavage or alteration of the target analyte, or chemical modification of the target; fluid pumps (including, but not limited to, electroosmotic, electrohydrodynamic, or electrokinetic pumps; fluid valves; thermal modules for heating and cooling; storage modules for assay reagents; mixing chambers; and detection modules.

In addition, while these microfluidic components are described herein as being associated with the cap of the cartridge, as will be appreciated by those in the art, these modules and channels (as well as other components outlined herein) may be located anywhere in the cartridge or device. In addition, some components may be in the device; for example, "off chip" pumps may be located within one or more stations of the device.

The cartridge comprises at least one biochip, with some embodiments utilizing one or more biochips per cartridge. By "biochip" or equivalents herein is meant a substrate comprising an array of distinct biomolecules, particularly nucleic acids and proteins. There are a wide variety of suitable nucleic acid biochips, including those made using photolithographic techniques (such as the Affymetrix GeneChip^{™}), spotting techniques (e.g. Synteni and Incyte), prining techniques (Agilent and Rosetta), three dimensional "gel pad" arrays, and those including electronic components (e.g. Nanogen). A preferred embodiment is described below and in U.S. Patent Nos. 5,591,578; 5,824,473; 5,705,348; 5,780,234 and 5,770,369; WO 98/20162; WO 98/20162; WO98/12430; WO98/57158; WO 00/16089) WO99/57317; WO99/67425; WO00/24941; PCT US00/10903; WO00/38836; WO99/37819; WO99/57319 and PCTUSOO/20476; and related materials

It should be noted that one distinct advantage of the use of the electronic detection methods outlined herein is that real time monitoring of reactions and hybridization can occur. That is, while systems based on fluorescence require the removal of excess (e.g. unbound) signaling probes (or target sequences when the target sequence itself has been fluorescently labeled during an amplification reaction, for example), the electronic methods outlined herein do not. That is, unless the probes comprising the ETMs are bound to the surface, little or no signal is seen even if unbound probes have not been removed. This allows the monitoring of real-time reactions, as well as multiple measurements on the same array. Accordingly, while the discussion below is directed mainly to the use of biochips comprising an array of electrodes, other array technologies are included in the present invention.

In a preferred embodiment, the biochips comprise substrates with a piuraiiiy of array locations. By "substrate" or "solid support" or other grammatical equivalents herein is meant any material that can be modified to contain discrete individual sites appropriate of the attachment or association of capture ligands. Suitable substrates include metal surfaces such as gold, electrodes as defined below, glass and modified or functionalized glass, fiberglass, teflon, ceramics, mica, plastic (including acrylics, polystyrene and copolymers of styrene and other materials, polypropylene, polyethylene, polybutylene, polyimide, polycarbonate, polyurethanes, Teflon^{™}, and derivatives thereof, etc.), GETEK (a blend of polypropylene oxide and fiberglass), etc, polysaccharides, nylon or nitrocellulose, resins, silica or silica-based materials including silicon and modified silicon, carbon, metals, inorganic glasses and a variety of other polymers, with printed circuit board (PCB) materials being particularly preferred.

The present system finds particular utility In array formats, i.e. wherein there is a matrix of addressable detection electrodes (herein generally referred to "pads", "addresses" or "micro-locations"). By "array" herein Is meant a plurality of capture ligands in an array format; the size of the array will depend on the composition and end use of the array. Arrays containing from about 2 different capture ligands to many thousands can be made. Generally, the array will comprise from two to as many as 100,000 or more, depending on the size of the electrodes, as well as the end use of the array. Preferred ranges are from about 2 to about 10,000, with from about 5 to about 1000 being preferred, and from about 10 to about 100 being particularly preferred. In some embodiments, the compositions of the invention may not be in array format; that is for some embodiments, compositions comprising a single capture ligand may be made as well. In addition, in some arrays, multiple substrates may be used, either of different or identical compositions. Thus for example, large arrays may comprise a plurality of smaller substrates.

The biochip comprises a substrate with at least one surface comprising an array of electrodes. By "electrode" herein is meant a composition, which, when connected to an electronic device, is able to sense a current or charge and convert it to a signal. Alternatively an electrode can be defined as a composition which can apply a potential to and/or pass electrons to or from species in the solution. Thus, an electrode is an ETM as described herein. Preferred electodes are known in the art and include, but are not limited to, certain metals and their oxides, including gold; platinum; palladium; silicon; aluminum: metal oxide electrodes including platinum oxide, titanium oxide, tin oxide, indium tin oxide, palladium oxide, silicon oxide, aluminum oxide, molybdenum oxide (Mo206), tungsten oxide (WO3) and ruthenium oxides; and carbon (including glassy carbon electrodes, graphite and carbon paste). Preferred electrodes include gold, silicon, carbon and metal oxide electrodes, with gold being particularly preferred.

The electrodes described herein are depicted as a flat surface, which is only one of the possible conformations of the electrode and is for schematic purposes only. The conformation of the electrode will vary with the detection method used and the configuration of the cartridge. For example, flat planar electrodes may be preferred for optical detection methods, or when arrays of nucleic acids are made, thus requiring addressable locations for both synthesis and detection. Alternatively, for single or low density analysis, the electrode may be in the form of a tube; this allows a maximum of surface area containing the nucleic acids to be exposed to a small volume of sample.

In a preferred embodiment, the detection electrodes are formed on a substrate. In addition, the discussion herein is generally directed to the formation of gold electrodes, but as will be appreciated by those in the art, other electrodes can be used as well. The substrate can comprise a wide variety of materials, as outlined above.

In general, preferred materials include printed circuit board materials. Circuit board materials are those that comprise an insulating substrate that is coated with a conducting layer and processed using lithography techniques, particularly photolithography techniques, to form the patterns of electrodes and interconnects (sometimes referred to in the art as interconnections or leads). The insulating substrate is generally, but not always, a polymer. As is known in the art, one or a plurality of layers may be used, to make either "two dimensional" (e.g. all electrodes and interconnections in a plane) or "three dimensional" (wherein the electrodes are on one surface and the interconnects may go through the board to the other side or wherein electrodes are on a plurality of surfaces) boards. Three dimensional systems frequently rely on the use of drilling or etching, followed by electroplating with a metal such as copper, such that the "through board" interconnections are made. Circuit board materials are often provided with a foil already attached to the substrate, such as a copper foil, with additional copper added as needed (for example for interconnections), for example by electroplating. The copper surface may then need to be roughened, for example through etching, to allow attachment of the adhesion layer.

Accordingly, in a preferred embodiment, the present invention includes biochips (sometimes referred to herein "chips") that comprise substrates comprising a plurality of electrodes, preferably gold electrodes. The number of electrodes is as outlined for arrays. Each electrode preferably comprises a self-assembled monolayer as outlined herein. In a preferred embodiment, one of the monolayer-forming species comprises a capture ligand as outlined herein. In addition, each electrode has an interconnection, that is attached to the electrode at one end and is ultimately attached to a device that can control the electrode. That is, each electrode is independently addressable.

Detection electrodes on circuit board material (or other substrates) are generally prepared in a wide variety of ways. In general, high purity gold is used, and it may be deposited on a surface via vacuum deposition processes (sputtering and evaporation) or solution deposition (electroplating or electroless processes). When electroplating is done, the substrate must initially comprise a conductive material; fiberglass circuit boards are frequently provided with copper foil. Frequently, depending on the substrate, an adhesion layer between the substrate and the gold in order to insure good mechanical stability is used. Thus, preferred embodiments utilize a deposition layer of an adhesion metal such as chromium, titanium, titanium/tungsten, tantalum, nickel or palladium, which can be deposited as above for the gold. When electroplated metal (either the adhesion metal or the electrode metal) is used, grain refining additives, frequently referred to in the trade as brighteners, can optionally be added to alter surface deposition properties. Preferred brighteners are mixtures of organic and inorganic species, with cobalt and nickel being preferred.

In general, the adhesion layer is from about 100 Å thick to about 25 microns (1000 microinches). The If the adhesion metal is electrochemically active, the electrode metal must be coated at a thickness that prevents "bleed-through"; if the adhesion metal is not electrochemically active, the electrode metal may be thinner. Generally, the electrode metal (preferably gold) is deposited at thicknesses ranging from about 500 Å to about 5 microns (200 microinches), with from about 30 microinches to about 50 microinches being preferred. In general, the gold is deposited to make electrodes ranging in size from about 5 microns to about 5 mm in diameter, with about 100 to 250 microns being preferred. The detection electrodes thus formed are then preferably cleaned and SAMs added, as is discussed below.

Methods of making a substrate comprising a plurality of gold electrodes first comprise coating an adhesion metal, such as nickel or palladium (optionally with brightener), onto the substrate. Electroplating is preferred. The electrode metal, preferably gold, is then coated (again, with electroplating preferred) onto the adhesion metal. Then the patterns of the device, comprising the electrodes and their associated interconnections are made using lithographic techniques, particularly photolithographic techniques as are known in the art, and wet chemical etching. Frequently, a non-conductive chemically resistive insulating material such as solder mask or plastic is laid down using these photolithographic techniques, leaving only the electrodes and a connection point to the leads exposed; the leads themselves are generally coated.

In one embodiment of the inventive structure, the solder mask is desirably made of a solvent soluble material rather than a water soluble material. Water soluble solder masks have become standard in the industry because of the environmental advantages of water soluble materials generally. Unfortunately, for a detector chip that is to be exposed to aqueous solutions, water soluble materials such as for example acetonitrile can dissolve when exposed to aqueous solution.

The methods continue with the addition of SAMs, described below. In a preferred embodiment, drop deposition techniques are used to add the required chemistry, i.e. the monolayer forming species, one of which is preferably a capture ligand comprising species. Drop deposition techniques are well known for making "spot" arrays. This is done to add a different composition to each electrode, i.e. to make an array comprising different capture ligands. Alternatively, the SAM species may be identical for each electrode, and this may be accomplished using a drop deposition technique or the immersion of the entire substrate or a surface of the substrate into the solution.

As the biochips comprise electrodes, there are a variety of additional components in addition to the chemistry outlined below, which may be present on the chip, including, but not limited to, interconnects, multiplexers, relay devices, filters, RF antennae, heating elements, electromagnetic components, etc.

Each electrode comprises an independent lead (interconnect) to transmit input and electronic response signals for each electrode of the array. In contrast to previous systems which require the ability to independently alter only input signals to each electrode but not electronic response signals, it is important in the present invention that both input and electronic response signals be independently monitorable for each electrode.

For a relatively small number of electrode pads and/or depending on the desired size of the array, providing direct connections using parallel circuits may be appropriate.

In a preferred embodiment, each electrode is individually connected to a corresponding input of a multiplexer via a corresponding interconnector. One problem presented in conventional systems and methods is the difficulty in providing electrical connections (inputs and/or outputs) to a large number of electrodes, particularly if the electrodes form a dense or close packed array. Several solutions to this problem have been identified, and include the use of circuitry that allows signal processing either simultaneously as sets of parallel circuits and connections, line-sample array addressing, serially in a time-domain multiplexed manner, or in parallel or serially using frequency domain and/or time-domain based separation techniques, among other available techniques, as are outlined herein.

For example, a preferred method to connect a first multiplicity of circuits or lines on the chip to a smaller plurality of lines at a connector leading from the chip are to use a switching device such as a multiplexer (MUX) or relays to selectively couple circuits on the chip or board with circuits off the board.

The number of multiplexers will depend on the number of electrodes in the array. In one embodiment, a single MUX is utilized. In a preferred embodiment, a plurality of MUXs are used. This can be done in a variety of ways, as will be appreciated by those in the art; in one embodiment, "sectors" of electrodes are assigned to a particular MUX; thus for example, rows or columns of the array may each have their own MUX. Alternatively, submultiplexers are used; for example, a column or row is connected to a respective sub-multiplexer, with the sub-multiplexer outputs going to another submultiplexer.

In a preferred embodiment, the multiplexer includes a binary counter which receives the control signal via the connector pad. The control signal is preferably a pulsed signal such as a clock signal and generates a sequential count to drive the decoders.

In a preferred embodiment, another way to connect a multiplicity of electrodes on the substrate to a smaller number of connector pads leading "off chip" is to use row-column select signals to allow the selection of individual electrodes.

Unfortunately, for structures and methods that access different electrodes or groups of electrodes in a time sequential manner, some correction or adjustment of the sensed results may be required when the difference in time is sufficiently large to alter the results, in order to maintain a calibration between earlier sensed and read-out data and later sensed and read-out data. The need for such adjustment will depend upon the assay, reaction kinetics and the time separation which may also be a function of the number of electrodes to be sensed or read-out. For example, in some embodiments it may be entirely reasonable to measure each of the 25 electrodes in a 5 x 5 array of electrodes a few seconds apart (e.g. 10 seconds apart); however, in other embodiments, the 4 minute separation between the first and last measurement may be unacceptable or difficult to compensate.

It is also desirable to consider the kinetics of reaction when the reaction takes place on or near a planar surface, such as the surface of the electrode. Diffusion rates may play a more important role than when the reaction occurs in solution. It is important to understand when or over what period of time the reaction takes place so that the measurements are taken at the appropriate time. This may be particularly important if an intermediate reaction product is to be sensed, or if a series of measurements are desirable, for example to do reaction kinetics.

Reaction kinetics are also an important consideration for the driving signals. Biosensors are limited by the chemical kinetics. For the class of molecules of interest here (DNA, DNA fragments, proteins, antibodies, and the like), each molecule has a maximum speed or velocity in the medium. For example, the molecules may typically be actively driven or moved in solution at frequencies between about 1 Hz and 10kHz, more typically between about 5 Hz and 5 kHz. At higher frequencies, the molecules only vibrate, while at lower frequencies the movement is not particularly useful.

In addition, there is an assay volume, that is the accessible volume of the assay, associated with each driving signal frequency. As the frequency increases, the assay volume shrinks in size and volume. This has implication for the distribution of electrodes and the driving signal frequency.

One additional consideration for sensing or measuring a reaction is the possible effect that the reaction medium (such as solution components, sample components, reaction components, etc.) may have on the electrodes. Sometimes the electrodes will degrade, become passivated, or otherwise change over time thereby affecting the accuracy and uniformity of measurements. Under such conditions it is desirable to perform the sensing, measurement, or analysis quickly, or at least according to predetermined timings so that the data collected will be properly interpreted.

In a preferred embodiment, one or more preamplifiers are used. As will be appreciated by those in the art, the preamplifier can be on the surface of the substrate, e.g. "on board" or "on chip", or may be provided in circuitry external to the array chip. It is preferable, however, that the preamplifier be included on the substrate to increase the signal-to-noise ratio of the signal provided to the external circuitry.

In a preferred embodiment, each individual electrode has an associated preamplifier.

In a preferred embodiment, the array is divided into "sectors", wherein a subset of the electrodes in the array have an associated MUX and preamplifier. Similarly, other components of the invention may be associated with sectors.

In a preferred embodiment, impedance matching is done.

In a preferred embodiment, filters are used, including, but not limited to, time domain filters and frequency domain filters, and combinations.

In addition to electronic components, the electrodes in preferred embodiments comprise self-assembled monolayers (SAMs). The compositions of these SAMs will vary with the detection method used. In general, there are two basic detection mechanisms. In a preferred embodiment, detection of an ETM is based on electron transfer through the stacked π-orbitals of double stranded nucleic acid. This basic mechanism is described in U.S. Patent Nos. 5,591,578, 5,770,369,5,705,348, and PCT US97/20014 and is termed "mechanism-1" herein. Briefly, previous work has shown that electron transfer can proceed rapidly through the stacked n-orbitals of double stranded nucleic add, and significantly more slowly through single-stranded nucleic acid. Accordingly, this can serve as the basis of an assay. Thus, by adding ETMs (either covalently to one of the strands or non-covalently to the hybridization complex through the use of hybridization indicators, described below) to a nucleic acid that is attached to a detection electrode via a conductive oligomer, electron transfer between the ETM and the electrode, through the nucleic acid and conductive oligomer, may be detected.

Alternatively, the ETM can be detected, not necessarily via electron transfer through nucleic acid, but rather can be directly detected on an electrode comprising a SAM; that is, the electrons from the ETMs need not travel through the stacked n orbitals in order to generate a signal. As above, in this embodiment, the detection electrode preferably comprises a self-assembled monolayer (SAM) that serves to shield the electrode from redox-active species in the sample. In this embodiment, the presence of ETMs on the surface of a SAM, that has been formulated to comprise slight "defects" (sometimes referred to herein as "microconduits", "nanoconduits" or "electroconduits") can be directly detected. This basic idea is termed "mechanism-2" herein. Essentially, the electroconduits allow particular ETMs access to the surface. Without being bound by theory, it should be noted that the configuration of the electroconduit depends in part on the ETM chosen. For example, the use of relatively hydrophobic ETMs allows the use of hydrophobic electroconduit forming species, which effectively exclude hydrophilic or charged ETMs. Similarly, the use of more hydrophilic or charged species in the SAM may serve to exclude hydrophobic ETMs.

It should be noted that these defects are to be distinguished from "holes" that allow direct contact of sample components with the detection electrode. As is more fully outlined below, the electroconduits can be generated in several general ways, including but not limited to the use of rough electrode surfaces, such as gold electrodes formulated on PC circuit boards; or the inclusion of at least two different species in the monolayer, i.e. using a "mixed monolayer", at least one of which is a electroconduit-forming species (EFS). Thus, upon binding of a target analyte, a soluble binding ligand comprising an ETM is brought to the surface, and detection of the ETM can proceed, putatively through the "electroconduits" to the electrode. Essentially, the role of the SAM comprising the defects is to allow contact of the ETM with the electronic surface of the electrode, while still providing the benefits of shielding the electrode from solution components and reducing the amount of non-specific binding to the electrodes. Viewed differently, the role of the binding ligand is to provide specificity for a recruitment of ETMs to the surface, where they can be directly detected.

Thus, in either embodiment, as is more fully outlined below, an assay complex is formed that contains an ETM, which is then detected using the detection electrode.

Thus, in a preferred embodiment, the electrode comprises a monolayer, comprising electroconduit forming species (EFS). As outlined herein, the efficiency of target analyte binding (for example, oligonucleotide hybridization) may increase when the analyte is at a distance from the electrode. Similarly, non-specific binding of biomolecules, including the target analytes, to an electrode is generally reduced when a monolayer is present. Thus, a monolayer facilitates the maintenance of the analyte away from the electrode surface. In addition, a monolayer serves to keep charged species away from the surface of the electrode. Thus, this layer helps to prevent electrical contact between the electrodes and the ETMs, or between the electrode and charged species within the solvent. Such contact can result in a direct "short circuit" or an indirect short circuit via charged species which may be present in the sample. Accordingly, the monolayer is preferably tightly packed in a uniform layer on the electrode surface, such that a minimum of "holes" exist. The monolayer thus serves as a physical barrier to block solvent accesibility to the electrode.

By "monolayer" or "self-assembled monolayer" or "SAM" herein is meant a relatively ordered assembly of molecules spontaneously chemisorbed on a surface, in which the molecules are oriented approximately parallel to each other and roughly perpendicular to the surface. A majority of the molecules includes a functional group that adheres to the surface, and a portion that interacts with neighboring molecules In the monolayer to form the relatively ordered array. A mixed" monolayer comprises a heterogeneous monolayer, that is, where at least two different molecules make up the monolayer.

Accordingly, in mechanism-1 systems, the monolayer comprises a first species comprising a conductive oligomer comprising the capture binding ligand, as is more fully outlined below, and a second species comprising a monolayer forming species, including either or both insulators or conductive oligomers.

In a preferred embodiment, the monolayer comprises electroconduit-forming species. By "electroconduit-forming species" or "EFS" herein is meant a molecule that is capable of generating sufficient electroconduits in a monolayer, generally of Insulators such as alkyl groups, to allow detection of ETMs at the surface. In general, EFS have one or more of the following qualities: they may be relatively rigid molecules, for example as compared to an alkyl chain; they may attach to the electrode surface with a geometry different from the other monolayer forming species (for example, alkyl chains attached to gold surfaces with thiol groups are thought to attach at roughly 45° angles, and phenyl-acetylene chains attached to gold via thiols are thought to go down at 90° angles); they may have a structure that sterically interferes or interrupts the formation of a tightly packed monolayer, for example through the inclusion of branching groups such as alkyl groups, or the inclusion of highly flexible species, such as polyethylene glycol units; or they may be capable of being activated to form electroconduits; for example, photoactivatible species that can be selectively removed from the surface upon photoactivation, leaving electroconduits.

Preferred EFS include conductive oligomers, as defined below, and phenyl-acetylene-polyethylene glycol species, as well as asymmetrical SAM-forming disulfide species. However, in some embodiments, the EFS is not a conductive oligomer.

In a preferred embodiment, the monolayer comprises conductive oligomers. By "conductive oligomer" herein is meant a substantially conducting oligomer, preferably linear, some embodiments of which are referred to In the literature as "molecular wires". By "substantially conducting" herein is meant that the oligomer is capable of transferring electrons at 100 Hz. Generally, the conductive oligomer has substantially overlapping π-orbitals, i.e. conjugated π-orbitals, as between the monomeric units of the conductive oligomer, although the conductive oligomer may also contain one or more sigma (o) bonds. Additionally, a conductive oligomer may be defined functionally by its ability to inject or receive electrons into or from an associated ETM. Furthermore, the conductive oligomer is more conductive than the insulators as defined herein. Additionally, the conductive oligomers of the invention are to be distinguished from electroactive polymers, that themselves may donate or accept electrons.

In a preferred embodiment, the conductive oligomers have a conductivity, S, of from between about 10⁻⁶ to about 10⁻⁴ Ω⁻¹cm⁻¹. with from about 10⁻⁵ to about 10³ Ω⁻¹cm⁻¹ being preferred, with these S values being calculated for molecules ranging from about 20Å to about 200Å. As described below, insulators have a conductivity S of about 10⁻⁷ Ω⁻¹cm⁻¹ or lower, with less than about 10⁻⁸ Ω⁻¹cm⁻¹ being preferred. See generally Gardner et al., Sensors and Actuators A 51 (1995) 57-66.

Suitable conductive oligomer structures, insulators, methods of attachment and moiety definitions are described in WO 98/57159 and WO 00/62931.

Desired characteristics of a conductive oligomer include high conductivity, sufficient solubility In organic solvents and/or water for synthesis and use of the compositions of the invention, and preferably chemical resistance to reactions that occur I) during nucleic acid synthesis (such that nucleosides containing the conductive oligomers may be added to a nucleic acid synthesizer during the synthesis of the compositions of the invention), ii) during the attachment of the conductive oligomer to an electrode, or iii) during hybridization assays. In addition, conductive oligomers that will promote the formation of self-assembled monolayers are preferred.

it will be appreciated that the monolayer may comprise different conductive oligomer species, although preferably the different species are chosen such that a reasonably uniform SAM can be formed. Thus, for example, when nucleic acids are covalently attached to the electrode using conductive oligomers, it is possible to have one type of conductive oligomer used to attach the nucleic acid, and another type functioning to detect the ETM. Similarly, it may be desirable to have mixtures of different lengths of conductive oligomers in the monolayer, to help reduce non-specific signals. Thus, for example, preferred embodiments utilize conductive oligomers that terminate below the surface of the rest of the monolayer, i.e. below the insulator layer, if used, or below some fraction of the other conductive oligomers. Similarly, the use of different conductive oligomers may be done to facilitate monolayer formation, or to make monolayers with altered properties.

In a preferred embodiment, the monolayer may further comprise insulator moieties. By "insulator" herein is meant a substantially nonconducting oligomer, preferably linear. By "substantially nonconducting" herein is meant that the insulator will not transfer electrons at 100 Hz. The rate of electron transfer through the insulator is preferrably slower than the rate through the conductive oligomers described herein.

In a preferred embodiment, the insulators have a conductivity. S, of about 10⁻⁷ Ω⁻¹cm⁻¹ or lower, with less than about 10⁻⁶ Ω⁻¹cm⁻¹ being preferred. See generally Gardner et al., supra.

Generally. Insulators are alkyl or heteroalkyl oligomers or moieties with sigma bonds, although any particular Insulator molecule may contain aromatic groups or one or more conjugated bonds. By "heteroalkyl" herein is meant an alkyl group that has at least one heteroatom, i.e. nitrogen, oxygen, sulfur, phosphorus, silicon or boron included in the chain. Alternatively, the insulator may be quite similar to a conductive oligomer with the addition of one or more heteroatoms or bonds that serve to inhibit or slow, preferably substantially, electron transfer.

Suitable insulators are known in the art, and include, but are not limited to, -(CH₂)ₙ-, -(CRH)ₙ-, and - (CR₂)ₙ-, ethylene glycol or derivatives using other heteroatoms in place of oxygen, i.e. nitrogen or sulfur (sulfur derivatives are not preferred when the electrode is gold).

The SAMs of the invention can be made in a variety of ways, including deposition out of organic solutions and deposition out of aqueous solutions. The methods outlined herein use a gold electrode as the example, although as will be appreciated by those In the art, other metals and methods may be used as well. In one preferred embodiment, indium-tin-oxide (ITO) is used as the electrode.

In a preferred embodiment, a gold surface is first cleaned. A variety of cleaning procedures may be employed, including, but not limited to, chemical cleaning or etchants (including Piranha solution (hydrogen peroxide/sulfuric acid) or aqua regia (hydrochloric acid/nitric acid), electrochemical methods, flame treatment, plasma treatment or combinations thereof.

Following cleaning, the gold substrate is exposed to the SAM species. When the electrode is ITO, the SAM species are phosphonate-containing species. This can also be done In a variety of ways, including, but not limited to, solution deposition, gas phase deposition, microcontact printing, spray deposition, deposition using neat components, etc. A preferred embodiment utilizes a deposition solution comprising a mixture of various SAM species in solution, generally thiol-containing species. Mixed monolayers that contain nucleic acids are usually prepared using a two step procedure. The thiolated nucleic acid is deposited during the first deposition step (generally in the presence of at least one other monolayer-forming species) and the mixed monolayer formation is completed during the second step in which a second thiol solution minus nucleic acid is added. Optionally, a second step utilizing mild heating to promote monolayer reorganization.

In a preferred embodiment, the deposition solution is an organic deposition solution. In this embodiment, a dean gold surface is placed into a dean vial. A binding ligand deposition solution in organic solvent is prepared in which the total thiol concentration is between micromotor to saturation; preferred ranges include from about 1 µM to 10 mM, with from about 400 uM to about 1.0 mM being especially preferred. In a preferred embodiment, the deposition solution contains thiol modified DNA (i.e. nucleic acid attached to an attachment linker) and thiol diluent molecules (either conductive oligomers or insulators, with the latter being preferred). The ratio of nucleic acid to diluent (if present) is usually between 1000:1 to 1:1000, with from about 10:1 to about 1:10 being preferred and 1:1 being especially preferred. The preferred solvents are tetrahydrofuran (THF), acetonitrile, dimethylforamide (DMF), ethanol, or mixtures thereof; generally any solvent of sufficient polarity to dissolve the capture ligand can be used, as long as the solvent is devoid of functional groups that will react with the surface. Sufficient nucleic acid deposition solution is added to the vial so as to completely cover the electrode surface. The gold substrate is allowed to incubate at ambient temperature or slightly above ambient temperature for a period of time ranging from seconds to hours, with 5-30 minutes being preferred. After the initial incubation, the deposition solution is removed and a solution of diluent molecule only (from about 1 µM to 10 mM, with from about 100 uM to about 1.0 mM being preferred) In organic solvent is added. The gold substrate is allowed to incubate at room temperature or above room temperature for a period of time (seconds to days, with from about 10 minutes to about 24 hours being preferred). The gold sample is removed from the solution, rinsed in clean solvent and used.

In a preferred embodiment, an aqueous deposition solution is used. As above, a clean gold surface is placed into a dean vial. A nucleic acid deposition solution in water is prepared in which the total thiol concentration is between about 1 uM and 10 mM, with from about 1 µM to about 200 uM being preferred. The aqueous solution frequently has salt present (up to saturation, with approximately 1 M being preferred), however pure water can be used. The deposition solution contains thiol modified nucleic add and often a thiol diluent molecule. The ratio of nucleic acid to diluent is usually between between 1000:1 to 1:1000, with from about 10:1 to about 1:10 being preferred and 1:1 being especially preferred. The nucleic acid deposition solution is added to the vial in such a volume so as to completely cover the electrode surface. The gold substrate is allowed to incubate at ambient temperature or slightly above ambient temperature for 1-30 minutes with 5 minutes usually being sufficient. After the initial incubation, the deposition solution is removed and a solution of diluent molecule only (10 uM -1.0 mM) in either water or organic solvent is added. The gold substrate is allowed to incubate at room temperature or above room temperature until a complete monolayer is formed (10 minutes-24 hours). The gold sample is removed from the solution, rinsed in dean solvent and used.

In a preferred embodiment, the deposition solution comprises a zwitterionic compound, preferably betaine. Preferred embodiments utilize betaine and Tris-HCl buffers.

In a preferred embodiment, as outlined herein, a circuit board is used as the substrate for the gold electrodes. Formation of the SAMs on the gold surface is generally done by first cleaning the boards, for example in a 10% sulfuric acid solution for 30 seconds, detergent solutions, aqua regia, plasma, etc., as outlined herein. Following the sulfuric add treatment, the boards are washed, for example via immersion in two Milli-Q water baths for 1 minute each. The boards are then dried, for example under a stream of nitrogen. Spotting of the deposition solution onto the boards is done using any number of known spotting systems, generally by placing the boards on an X-Y table, preferably in a humidity chamber. The size of the spotting drop will vary with the size of the electrodes on the boards and the equipment used for delivery of the solution; for example, for 250 µM size electrodes, a 30 nanoliter drop is used. The volume should be sufficient to cover the electrode surface completely. The drop is incubated at room temperature for a period of time (sec to overnight, with 5 minutes preferred) and then the drop is removed by rinsing in a Milli-Q water bath. The boards are then optionally treated with a second deposition solution, generally comprising insulator in organic solvent, preferably acetonitrile, by immersion in a 45°C bath. After 30 minutes, the boards are removed and immersed in an acetonitrile bath for 30 seconds followed by a milli-Q water bath for 30 seconds. The boards are dried under a stream of nitrogen. Preferrably, only the water rinse is employed.

In a preferred embodiment, the detection electrode comprising the SAM (or the sites on the array, for non-electrode embodiments) further comprises capture binding ligands, preferably covalently attached. By "binding ligand" or "binding species" herein is meant a compound that is used to probe for the presence of the target analyte, that will bind to the target analyte. In general, for most of the embodiments described herein, there are at least two binding ligands used per target analyte molecule; a "capture" or "anchor" binding ligand (also referred to herein as a "capture probe", particularly in reference to a nucleic acid binding ligand) that is attached to the detection electrode as described herein, and a soluble binding ligand (frequently referred to herein as a "signaling probe" or a "label probe"), that binds independently to the target analyte, and either directly or indirectly comprises at least one ETM. However, it should be noted that for fluorescence-based nucleic acid detection systems, the target sequence is generally amplified, and during amplification, a fluorescent label is added; thus these systems generally comprise only two elements, the capture probe and the labeled target. Again, the discussion below is directed to the use of electrodes and electrochemical detection, but as will be appreciated by those in the art, fluorescent based systems can be used as well.

Generally, the capture binding ligand allows the attachment of a target analyte to the detection electrode, for the purposes of detection. As is more fully outlined below, attachment of the target analyte to the capture binding ligand may be direct (i.e. the target analyte binds to the capture binding ligand) or indirect (one or more capture extender ligands may be used).

In a preferred embodiment, the binding is specific, and the binding ligand is part of a binding pair. By "specifically bind" herein is meant that the ligand binds the analyte, with specificity sufficient to differentiate between the analyte and other components or contaminants of the test sample. However, as will be appreciated by those in the art, it will be possible to detect analytes using binding that is not highly specific; for example, the systems may use different binding ligands, for example an array of different ligands, and detection of any particular analyte is via its "signature" of binding to a panel of binding ligands, similar to the manner in which "electronic noses" work. The binding should be sufficient to allow the analyte to remain bound under the conditions of the assay, including wash steps to remove non-specific binding. In some embodiments, for example in the detection of certain biomolecules, the binding constants of the analyte to the binding ligand will be at least about 10⁻⁴ to 10⁻⁶ M⁻¹,with at least about 10⁻⁵ to 10⁻⁹ being preferred and at least about 10⁻⁷ to 10⁻⁹ M⁻¹ being particularly preferred.

As will be appreciated by those in the art, the composition of the binding ligand will depend on the composition of the target analyte. Binding ligands to a wide variety of analytes are known or can be readily found using known techniques. For example, when the analyte is a single-stranded nucleic acid, the binding ligand is generally a substantially complementary nucleic acid. Alternatively, as is generally described in U.S. Patents 5,270,163, 5,475,096, 5,567,588, 5,595,877, 5,637,459, 5,683,867,5,705,337, and related patents, nucleic acid "aptamers" can be developed for binding to virtually any target analyte. Similarly the analyte may be a nucleic acid binding protein and the capture binding ligand is either a single-stranded or double-stranded nucleic add; alternatively, the binding ligand may be a nucleic acid binding protein when the analyte is a single or double-stranded nucleic acid. When the analyte is a protein, the binding ligands include proteins (particularly including antibodies or fragments thereof (FAbs, etc.)), small molecules, or aptamers, described above. Preferred binding ligand proteins include peptides. For example, when the analyte is an enzyme, suitable binding ligands include substrates, inhibitors, and other proteins that bind the enzyme, i.e. components of a multi-enzyme (or protein) complex. As will be appreciated by those in the art, any two molecules that will associate, preferably specifically, may be used, either as the analyte or the binding ligand. Suitable anatyte/binding ligand pairs Include, but are not limited to, antibodies/antigens, receptors/ligand, proteins/nucleic acids; nucleic acids/nucleic acids, enzymes/substrates and/or inhibitors, carbohydrates (including glycoproteins and glycolipids)/lectins, carbohydrates and other binding partners, proteins/proteins; and protein/small molecules. These may be wild-type or derivative sequences. In a preferred embodiment, the binding ligands are portions (particularly the extracellular portions) of cell surface receptors that are known to multimerize, such as the growth hormone receptor, glucose transporters (particularly GLUT4 receptor), transferrin receptor, epidermal growth factor receptor, low density lipoprotein receptor, high density lipoprotein receptor, leptin receptor, interleukin receptors including IL-1, IL-2, IL-3. IL-4, IL-5, IL-6, IL-7, IL-8. IL-9; IL-11, IL-12, IL-13, IL-15 and IL-17 receptors, VEGF receptor, PDGF receptor, EPO receptor; TPO receptor, ciliary neurotrophic factor receptor, prolactin receptor, and T-cell receptors. Similarly, there is a wide body of literature rotating to the development of binding partners based on combinatorial chemistry methods.

In this embodiment, when the binding ligand is a nucleic acid, preferred compositions and techniques are outlined in U.S. Patent Nos. 5,591,578; 5,824,473; 5,705,348; 5,780,234 and 5,770,369; WO 98/20162 ; WO 98/20162; WO98/12430; WO98/57158; WO 00/16089) WO99/57317; WO99/67425; WO00/24941; PCT US00/10903; WO00/38836; WO99/37819; WO99/57319 and PCTUS00/20476; and related materials.

The method of attachment of the capture binding ligands to the attachment linker (either an insulator or conductive oligomer) will generally be done as is known in the art, and will depend on both the composition of the attachment linker and the capture binding ligand. In general, the capture binding ligands are attached to the attachment linker through the use of functional groups on each that can then be used for attachment. Preferred functional groups for attachment are amino groups, carboxy groups, oxo groups and thiol groups. These functional groups can then be attached, either directly or indirectly through the use of a linker, sometimes depicted herein as "Z". Linkers are well known in the art; for example, homo-or hetero-bifunctional linkers as are well known (see 1994 Pierce Chemical Company catalog, technical section on cross-linkers, pages 155-200. Preferred Z linkers include, but are not limited to, alkyl groups (including substituted alkyl groups and alkyl groups containing heteroatom moleties), with short alkyl groups, esters, amide, amine, epoxy groups and ethylene glycol and derivatives being preferred, with propyl, acetylene, and C₂ alkene being especially preferred. Z may also be a sulfone group, forming sulfonamide linkages.

In this way, capture binding ligands comprising proteins, lectins, nucleic acids, small organic molecules, carbohydrates, etc. can be added.

A preferred embodiment utilizes proteinaceous capture binding ligands. As is known in the art, any number of techniques may be used to attach a proteinaceous capture binding ligand to an attachment linker. A wide variety of techniques are known to add moieties to proteins.

A preferred embodiment utilizes nucleic acids as the capture binding ligand. While most of the following discussion focuses on nucleic acids, as will be appreciated by those in the art, many of the techniques outlined below apply in a similar manner to non-nucleic acid systems as well, and to systems that rely on attachment to surfaces other than metal electrodes.

The capture probe nucleic acid is covalently attached to the electrode, via an "attachment linker", that can be either a conductive oligomer (required for mechanism-t systems) or an insulator. By "covalently attached" herein is meant that two moieties are attached by at least one bond, including sigma bonds, pi bonds and coordination bonds.

Thus, one end of the attachment linker is attached to a nucleic acid (or other binding ligand), and the other end (although as will be appreciated by those in the art, it need not be the exact terminus for either) is attached to the electrode.

In a preferred embodiment, there may be one or more different capture probe species on the surface. In some embodiments, there may be one type of capture probe, or one type of capture probe extender, as is more fully described below. Alternatively, different capture probes, or one capture probes with a multiplicity of different capture extender probes can be used. Similarly, it may be desirable (particular in the case of nucleic acid analytes and binding ligands in mechanism-2 systems) to use auxiliary capture probes that comprise relatively short probe sequences, that can be used to "tack down" components of the system, for example the recruitment linkers, to increase the concentration of ETMs at the surface.

In a preferred embodiment, a number of capture probes are designed and used for each target sequence. That is, a single electrode pad of the array may have 1 probe to the target analyte, or a plurality of probes to the same target sequence, preferably (but not required to be) non-overlapping. This is particularly preferred for long target sequences. In this embodiment, at least two different capture probes are used, with at least 3, 4, 5, 6, 7, 8, 9 or 10 being preferred, and 8 being particularly preferred.

In a preferred embodiment the compositions further comprise a solution or soluble binding ligand; although as is more fully described below, for mechanism-1 systems, the ETMs may be added in the form of non-covalently attached hybridization indicators. Solution binding ligands are similar to capture binding ligands, in that they bind, preferably specifically, to target analytes. The solution binding ligand (generally referred to herein as label probes when the target analytes are nucleic adds) may be the same or different from the capture binding ligand. Generally, the solution binding ligands are not directly attached to the surface. The solution binding ligand either directly comprises a recruitment linker that comprises at least one ETM WO 01/07665, or the recruitment linker binds, either directly or indirectly, to the solution binding ligand.

Thus, "solution binding ligands" or "soluble binding ligands" or "signal carriers" or "label probes" or "label binding ligands'' with recruitment linkers comprising covalently attached ETMs are provided. That is, one portion of the label probe or solution binding ligand directly or indirectly binds to the target analyte, and one portion comprises a recruitment linker comprising covalently attached ETMs. In some systems, for example in mechanism-1 nucleic add systems, these may be the same. Similarly, for mechanism-1 systems, the recruitment linker comprises nucleic add that will hybridize to detection probes. The terms "electron donor molety", "electron acceptor molety", and "ETMS" (ETMs) or grammatical equivalents herein refers to molecules capable of electron transfer under certain conditions. It Is to be understood that electron donor and acceptor capabilities are relative; that is, a molecule which can lose an electron under certain experimental conditions will be able to accept an electron under different experimental conditions. It is to be understood that the number of possible electron donor moieties and electron acceptor moieties Is very large, and that one skilled in the art of electron transfer compounds will be able to utilize a number of compounds in the present invention. Preferred ETMs include, but are not limited to, transition metal complexes, organic ETMs, and electrodes.

In the structures depicted herein, M is a metal atom, with transition metals being preferred. Suitable transition metals for use in the invention include, but are not limited to, cadmium (Cd), copper (Cu), cobalt (Co), palladium (Pd), zinc (Zn), iron (Fe), ruthenium (Ru), rhodium (Rh), osmium (Os), rhenium (Re), platinium (Pt), scandium (Sc), titanium (TI). Vanadium (V), chromium (Cr), manganese (Mn), nickel (Ni), Molybdenum (Mo), technetium (Tc), tungsten (W), and iridium (Ir). That is, the first series of transition metals, the platinum metals (Ru, Rh, Pd, Os. Ir and Pt), along with Fe, Re, W, Mo and Tc, are preferred. Particularly preferred are ruthenium, rhenium, osmium, platinium, cobalt and iron.

L are the co-ligands, that provide the coordination atoms for the binding of the metal ion. As will be appreciated by those in the art, the number and nature of the co-ligands will depend on the coordination number of the metal ion. Mono-, di- or polydentate co-ligands may be used at any position. Thus, for example, when the metal has a coordination number of six, the L from the terminus of the conductive oligomer, the L contributed from the nucleic acid, and r, add up to six. Thus, when the metal has a coordination number of six, r may range from zero (when all coordination atoms are provided by the other two ligands) to four, when all the co-ligands are monodentate. Thus generally, r will be from 0 to 8, depending on the coordination number of the metal ion and the choice of the other ligands.

In one embodiment, the metal ion has a coordination number of six and both the ligand attached to the conductive oligomer and the ligand attached to the nucleic add are at least bidentate; that is, r is preferably zero, one (i.e. the remaining co-ligand is bidentate) or two (two monodentate co-ligands are used).

As will be appreciated in the art, the co-ligands can be the same or different. Suitable ligands fall into two categories: ligands which use nitrogen, oxygen, sulfur, carbon or phosphorus atoms (depending on the metal ion) as the coordination atoms (generally referred to in the literature as sigma (o) donors) and organometallic ligands such as metallocene ligands (generally referred to in the literature as pi (π) donors, and depicted herein as Lₘ). Suitable nitrogen donating ligands are well known in the art and include, but are not limited to, NH₂; NHR; NRR'; pyridine; pyrazine; isonicotinamide; imidazole; bipyridine and substituted derivatives of bipyridine; terpyridine and substituted derivatives; phenanthrolines, particularly 1,10-phenanthroline (abbreviated phen) and substituted derivatives of phenanthrolines such as 4,7-dimethylphenanthroline and dipyridol[3,2-a2',3'-c]phenazine (abbreviated dppz); dipyridophenazine; 1,4,5,8,9,12-hexaazatriphenylene (abbreviated hat); 9,10-phenanthrenequinone diimine (abbreviated phi); 1,4,5,8-tetraazaphenanthrene (abbreviated tap); 1,4,8,11-tetra-azacyclotetradecane (abbreviated cyclam), EDTA, EGTA and isocyanide. Substituted derivatives, including fused derivatives, may also be used. In some embodiments, porphyrins and substituted derivatives of the porphyrin family may be used. See for example, Comprehensive Coordination Chemistry, Ed. Wilkinson et al., Pergammon Press, 1987, Chapters 13.2 (pp73-98), 21.1 (pp. 813-898) and 21.3 (pp 915-957).

Suitable sigma donating ligands using carbon, oxygen, sulfur and phosphorus are known in the art. For example, suitable sigma carbon donors are found in Cotton and Wilkenson, Advanced Organic Chemistry, 5th Edition, John Wiley & Sons, 1988; see page 38, for example. Similarly, suitable oxygen ligands include crown ethers, water and others known in the art. Phosphines and substituted phosphines are also suitable ; see page 38 of Cotton and Wilkenson.

The oxygen, sulfur, phosphorus and nitrogen-donating ligands are attached In such a manner as to allow the heteroatoms to serve as coordination atoms.

In a preferred embodiment, organometallic ligands are used. In addition to purely organic compounds for use as redox moieties, and various transition metal coordination complexes with δ-bonded organic ligand with donor atoms as heterocyclic or exocyclic substituents, there is available a wide variety of transition metal organometallic compounds with n-bonded organic ligands (see Advanced Inorganic Chemistry, 5th Ed., Cotton & Wilkinson, John Wiley & Sons, 1988, chapter 26; Organometallics, A Concise introduction, Elschenbroich et al., 2nd Ed., 1992, VCH; and Comprehensive Organometallic Chemistry II, A Review of the Literature 1982-1994, Abel et al. Ed., Vol. 7, chapters 7, 8, 10 & 11. Pergamon Press). Such organometallic ligands include cyclic aromatic compounds such as the cyclopentadienide ion [C₅H₅(-1)] and various ring substituted and ring fused derivatives, such as the indenylide (-1) ion, that yield a class of bis(cyclopentadieyl) metal compounds, (i.e. the metallocenes); see for example Robins et al., J. Am. Chem. Soc. 104:1882-1893 (1982); and Gassman et al., J. Am. Chem. Soc. 108:4228-4229 (1986). Of these, ferrocene [(C₅H₅)₂Fe] and its derivatives are prototypical examples which have been used in a wide variety of chemical (Connelly et al., Chem. Rev. 96:877-910 (1996), and electrochemical (Geiger et al., Advances in Organometallic Chemistry 23:1-93; and Geiger et al., Advances in Organometallic Chemistry 24:87) electron transfer or "redox" reactions. Metallocene derivatives of a variety of the first, second and third row transition metals are potential candidates as redox moieties that are covalently attached to either the ribose ring or the nucleoside base of nucleic acid. Other potentially suitable organometallic ligands include cyclic arenes such as benzene, to yield bis(arene)metal compounds and their ring substituted and ring fused derivatives, of which bis(benzene)chromium is a prototypical example. Other acyclic π-bonded ligands such as the allyl(-1) ion, or butadiene yield potentially suitable organometallic compounds, and all such ligands. In conduction with other n-bonded and δ-bonded ligands constitute the general class of organometallic compounds in which there is a metal to carbon bond. Electrochemical studies of various dimers and oligomers of such compounds with bridging organic ligands, and additional non-bridging ligands, as well as with and without metal-metal bonds are potential candidate redox moieties in nucleic add analysis.

When one or more of the co-ligands is an organometallic ligand, the ligand is generally attached via one of the carbon atoms of the organometallic ligand, although attachment may be via other atoms for heterocyclic ligands. Preferred organometallic ligands include metallocene ligands, including substituted derivatives and the metalloceneophanes (see page 1174 of Cotton and Wilkenson, supra). For example, derivatives of metallocene ligands such as methylcyclopentadienyl, with multiple methyl groups being preferred, such as pentamethylcyclopentadienyl, can be used to increase the stability of the metallocene, In a preferred embodiment, only one of the two metallocene ligands of a metallocene are derivatized.

As described herein, any combination of ligands may be used. Preferred combinations include: a) all ligands are nitrogen donating ligands; b) all ligands are organometallic ligands; and c) the ligand at the terminus of the attachment linker is a metallocene ligand and the ligand provided by the nucleic acid is a nitrogen donating ligand, with the other ligands, if needed, are either nitrogen donating ligands or metallocene ligands, or a mixture.

In a preferred embodiment, the ETMs are transition metal complexes. Transition metals are those whose atoms have a partial or complete d shell of electrons. Suitable transition metals for use in the invention are listed above.

The transition metals are complexed with a variety of ligands, L, defined above, to form suitable transition metal complexes, as is well known in the art.

Preferred ETMs comprise metallocenes, particularly ferrocene.

In addition to transition metal complexes, other organic electron donors and acceptors may be covalently attached to the nucleic acid for use in the invention. These organic molecules include, but are not limited to, riboflavin, xanthene dyes, azine dyes, acridine orange, *N*,*N*-dimethyl-2,7-diazapyrenium dichloride (DAP²⁺), methylviologen, ethidium bromide, quinones such as N,N'-dimethytanthra(2,1,9-*def*:6,5,10-*d'e'f'*)diisoquinoline dichloride(ADIQ²⁺); porphyrins ([meso-tetrakis(N-methyl-x-pyridinium)porphyrin tetrachloride], varlamine blue B hydrochloride, Bindschedier's green; 2,6-dichloroindophenol, 2,6-dibromophenolindophenol; Brillliant crest blue (3-amino-9-dimethyl-emino-10-methylphenoxyazine chloride), methylene blue; Nile blue A (aminoaphthodiethylaminophenoxazine sulfate), indigo-5.5',7,7'-tetrasulfonic acid, indigo-5,5',7-trisulfonic acid; phenosafranine, indigo-5-monosulfonic acid; safranine T; bis(dimethylglyoximato)-iron(II) chloride; induline scarlet, neutral red, anthracene, coronene; pyrene, 9-phenylanthracene, rubrene, binaphthyl, DPA. phenothiazene, fluoranthene, phenanthrene, chrysene. 1,8-diphenyl-1,3,5,7-octatetracene, naphthalene, acenaphthalene, perylene, TMPD and analogs and substituted derivatives of these compounds.

In one embodiment, the electron donors and acceptors are redox proteins as are known in the art. However, redox proteins in many embodiments are not preferred.

The choice of the specific ETMs will be Influenced by the type of electron transfer detection used, as is generally outlined below. Preferred ETMs are metallocenes, with ferrocene being particularly preferred.

A target nucleic acid sequence is attached (via hybridization) to an electrode comprising a monolayer, generally including conductive oligomers. This attachment can be either directly to a capture probe on the surface, or indirectly, using capture extender probes. In some embodiments, the target sequence itself comprises the ETMs. Alternatively, a label probe is then added, forming an assay complex. The attachment of the label probe may be direct (i.e. hybridization to a portion of the target sequence), or indirect (i.e. hybridization to an amplifier probe that hybridizes to the target sequence), with all the required nucleic acids forming an assay complex. As a result of the hybridization of the first portion of the label probe, the second portion of the label probe, the "recruitment linker", containing the ETMs is brought into spatial proximity to SAM surface on the electrode, and the presence of the ETM can then be detected electronically.

Electrodes comprising monolayers comprising SAM forming species and capture probes, are useful in nucleic add (or other target analyte) detection systems. Compositions may further comprise a label probe. The label probe is nucleic acid, generally single stranded, although as more fully outlined below, it may contain double-stranded portions. In mechanism-2 systems, the label probe comprises a first portion that is capable of hybridizing to a component of the assay complex, defined below, and a second portion that does not hybridize to a component of an assay complex and comprises at least one covalently attached ETM.

Without being bound by theory, it appears that in "mechanism-2" systems, electron transfer is facilitated when the ETM is able to penetrate ("snuggle") into the monolayer to some degree. That is, in general, it appears that hydrophobic ETMs used with hydrophobic SAMs give rise to better (greater) signals than ETMs that are charged or more hydrophilic. Thus, for example, ferrocene in solution can penetrate the monolayers of the examples and give a signal when electroconduits are present, while ferrocyanide in solution gives little or no signal. Thus, in general, hydrophobic ETMs are preferred in mechanism-2 systems; however, transition metal complexes, although charged, with one or more hydrophobic ligands, such as Ru and Os complexes, also give rise to good signals. Similarly, electron transfer between the ETM and the electrode is facilitated by the use of linkers or spacers that allow the ETM some flexibility to penetrate into the monolayer; thus the N6 compositions of the invention have a four carbon linker attaching the ETM to the nucleic acid.

In a preferred embodiment, a plurality of ETMs are used. The use of multiple ETMs provides signal amplification and thus allows more sensitive detection limits. As discussed below, while the use of multiple ETMs on nucleic acids that hybridize to complementary strands can cause decreases in Tₘs of the hybridization complexes depending on the number, site of attachment and spacing between the multiple ETMs, this Is not a factor when the ETMs are on the recruitment linker, since this does not hybridize to a complementary sequence. Accordingly, pluralities of ETMs are preferred, with at least about 2 ETMs per recruitment linker being preferred, and at least about 10 being particularly preferred, and at least about 20 to 50 being especially preferred. In some instances, very large numbers of ETMs (100 to 1000) can be used.

As will be appreciated by those In the art, the portion of the label probe (or target, in some embodiments) that comprises the ETMs (termed herein a "recruitment linker- or "signal carrier") can be nucleic add, or it can be a non-nucleic acid linker that links the first hybridizable portion of the label probe to the ETMs. That is, since this portion of the label probe is not required for hybridization, it need not be nucleic acid, although this may be done for ease of synthesis, In some embodiments, as is more fully outlined below, the recruitment linker may comprise double-stranded portions. Thus, as will be appreciated by those in the art, there are a variety of configurations that can be used. In a preferred embodiment, the recruitment linker is nucleic acid (Including analogs), and attachment of the ETMs can be via (1) a base; (2) the backbone, including the ribose, the phosphate, or comparable structures in nucleic add analogs; (3) nucleoside replacement, described below; or (4) metallocene polymers, as described below. In a preferred embodiment, the recruitment linker is non-nucleic acid, and can be either a metallocene polymer or an alkyl-type polymer (including heteroalkyl, as is more fully described below) containing ETM substitution groups. These options are generally depicted in the Figures.

In a preferred embodiment, the recruitment linker is a nucleic acid, and comprises covalently attached ETMs. The ETMs may be attached to nucleosides within the nucleic acid in a variety of positions. Preferred embodiments include, but are not limited to, (1) attachment to the base of the nucleoside, (2) attachment of the ETM as a base replacement, (3) attachment to the backbone of the nucleic acid, including either to a ribose of the ribose-phosphate backbone or to a phosphate moiety, or to analogous structures in nucleic acid analogs, and (4) attachment via metallocene polymers, with the latter being preferred.

In addition, as is described below, when the recruitment linker is nucleic acid, it may be desirable to use secondary label probes, that have a first portion that will hybridize to a portion of the primary label probes and a second portion comprising a recruitment linker as is defined herein. This is similar to the use of an amplifier probe, except that both the primary and the secondary label probes comprise ETMs.

In a preferred embodiment, the 2' position of a ribose of a phosphoramidite nucleotide is first functionalized to contain a protected hydroxy group, in this case via an oxo-linkage, although any number of linkers can be used, as is generally described herein for Z linkers. The protected modified nucleotide is then incorporated via standard phosphoramidite chemistry into a growing nucleic acid. The protecting group is removed, and the free hydroxy group Is used, again using standard phosphoramidite chemistry to add a phosphoramidite metallocene such as ferrocene. A similar reaction is possible for nucleic add analogs. For example, using peptide nucleic acids and the metallocene monomer shown in Structure 41, peptide nucleic add structures containing metallocene polymers could be generated.

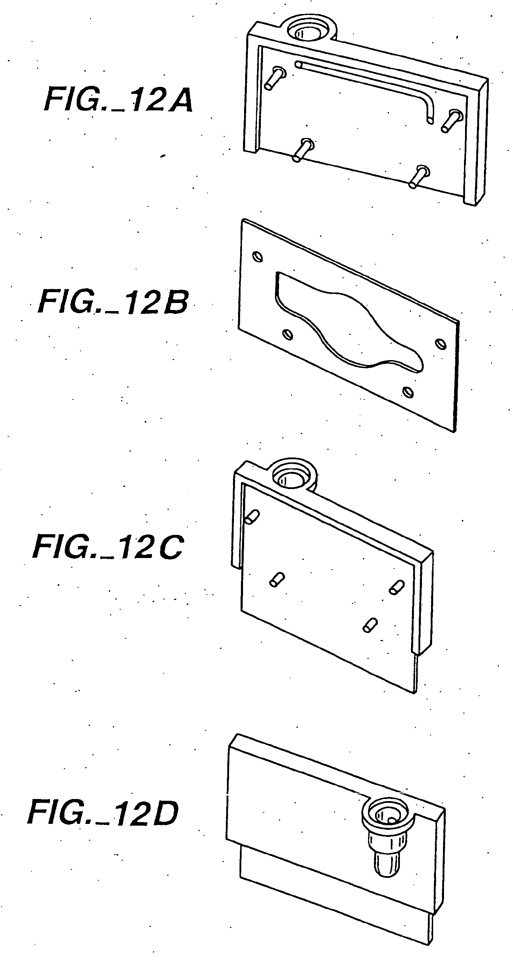

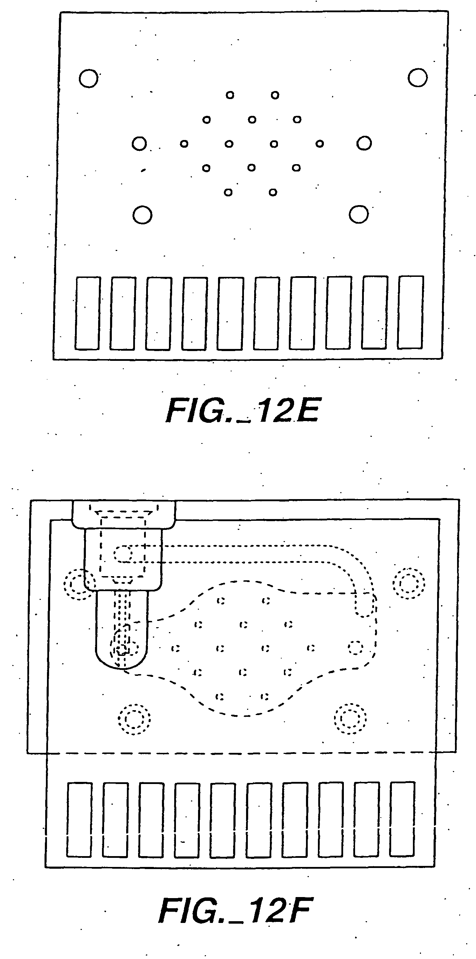

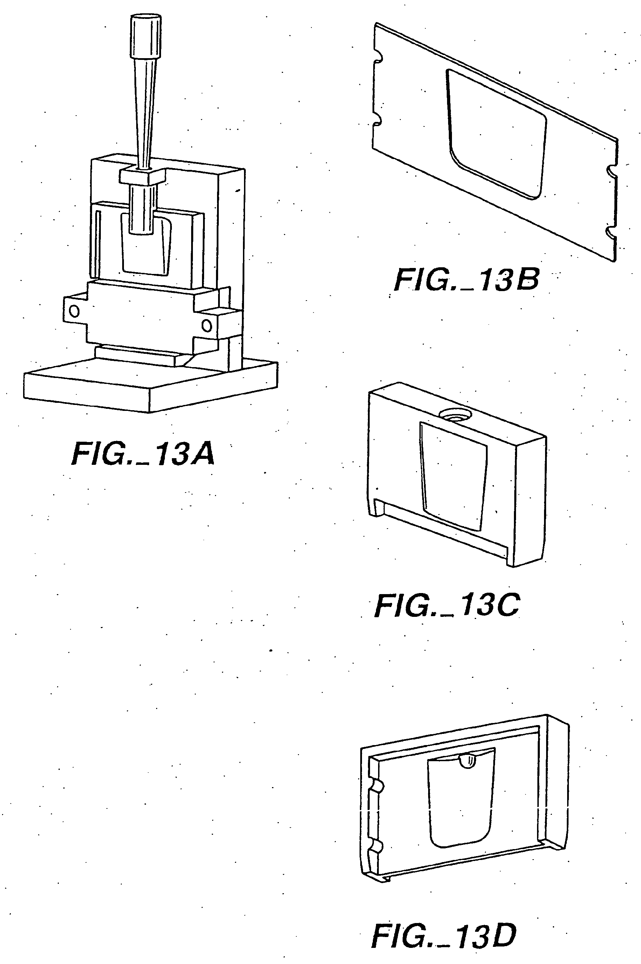

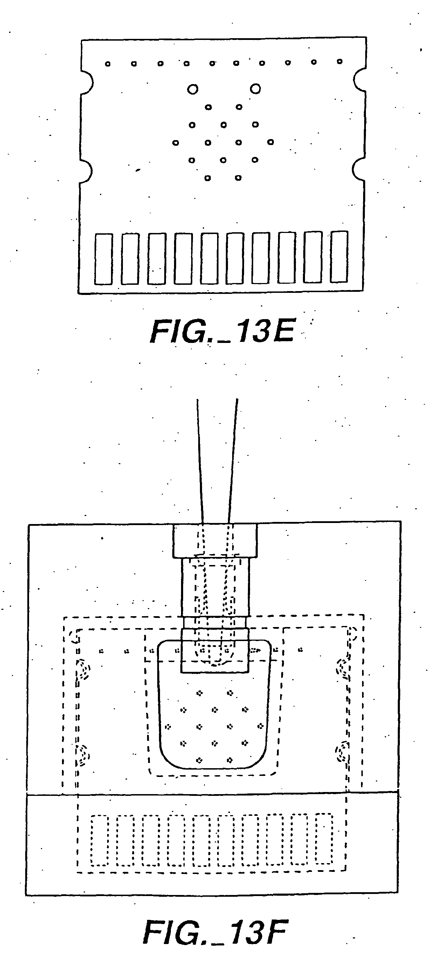

Recruitment linkers of nucleic acids comprising "branches" of metallocene polymers are generally depicted in Figures 12 and 13. Preferred embodiments also utilize metallocene polymers from one to about 50 metallocenes in length, with from about 5 to about 20 being preferred and from about 5 to about 10 being especially preferred.

In addition, when the recruitment linker is nucleic acid, any combination of ETM attachments may be done.

In a preferred embodiment, the recruitment linker is not nucleic acid, and Instead may be any sort of linker or polymer. As will be appreciated by those in the art, generally any linker or polymer that can be modified to contain ETMs can be used. In general, the polymers or linkers should be reasonably soluble and contain suitable functional groups for the addition of ETMs.

As used herein, a "recruitment polymer" comprises at least two or three subunits, which are covalently attached. At least some portion of the monomeric subunits contain functional groups for the covalent attachment of ETMs. In some embodiments coupling moieties are used to covalently link the subunits with the ETMs. Preferred functional groups for attachment are amino groups, carboxy groups, oxo groups and thiol groups, with amino groups being particularly preferred. As will be appreciated by those in the art, a wide variety of recruitment polymers are possible.

Suitable linkers include, but are not limited to, alkyl linkers (including heteroalkyl (including (poly)ethylene glycol-type structures), substituted alkyl, aryalkyl linkers, etc. As above for the polymers, the linkers will comprise one or more functional groups for the attachment of ETMs, which will be done as will be appreciated by those in the art, for example through the use homo-or hetero-bifunctional linkers as are well known (see 1994 Pierce Chemical Company catalog, technical section on cross-linkers, pages 155-200).

Suitable recruitment polymers include, but are not limited to, functionalized styrenes, such as amino styrene, functionalized dextrans, and polyamino acids. Preferred polymers are polyamino acids (both poly-D-amino acids and poly-L-amino acids), such as polylysine, and polymers containing lysine and other amino adds being particularly preferred. Other suitable polyamino acids are polyglutamic acid, polyaspartic acid, co-polymers of lysine and glutamic or aspartic add, co-polymers of lysine with alanine, tyrosine, phenylalanine, serine, tryptophan, and/or proline.

In a preferred embodiment, the recruitment linker comprises a metallocene polymer, as is described above.

The attachment of the recruitment linkers to the first portion of the label probe will depend on the composition of the recruitment linker, as will be appreciated oy those in the art. When the recruitment linker is nucleic acid, it is generally formed during the synthesis of the first portion of the label probe, with incorporation of nucleosides containing ETMs as required. Alternatively, the first portion of the label probe and the recruitment linker may be made separately, and then attached. For example, there may be an overlapping section of complementarity, forming a section of double stranded nucleic acid that can then be chemically crosslinked, for example by using psoralen as is known in the art

When non-nucleic add recruitment linkers are used, attachment of the linker/polymer of the recruitment linker will be done generally using standard chemical techniques, such as will be appreciated by those in the art. For example, when alkyl-based linkers are used, attachment can be similar to the attachment of insulators to nucleic acids.

In addition, it is possible to have recruitment linkers that are mixtures of nucleic acids and non-nucleic acids, either in a linear form (i.e. nucleic acid segments linked together with alkyl linkers) or in branched forms (nucleic acids with alkyl "branches" that may contain ETMs and may be additional branched).

In a preferred embodiment, it is the target sequence itself that carries the ETMs, rather than the recruitment linker of a label probe.

Thus, electrodes comprising monolayers comprising conductive oligomers, generally including capture probes, and either target sequences or label probes comprising recruitment linkers containing ETMs may be used. Probes are designed to be complementary to a target sequence (either the target sequence of the sample or to other probe sequences, as is described below), such that hybridization of the target sequence and the probes occurs. As outlined below, this complementarity need not be perfect ; there may be any number of base pair mismatches which will interfere with hybridization between the target sequence and the single stranded nucleic acids of the present invention. However, if the number of mutations is so great that no hybridization can occur under even the least stringent of hybridization conditions, the sequence Is not a complementary target sequence. Thus, by "substantially complementary" herein is meant that the probes are sufficiently complementary to the target sequences to hybridize under normal reaction conditions.

A variety of hybridization conditions may be used in the present invention, including high, moderate and low stringency conditions; see for example Maniatis et al., Molecular Cloning: A Laboratory Manual, 2d Edition, 1989, and Short Protocols in Molecular Biology, ed. Ausubel, et al. The hybridization conditions may also vary when a non-ionic backbone. i.e. PNA is used, as is known in the art. In addition, cross-linking agents may be added after target binding to cross-link, i.e. covalently attach, the two strands of the hybridization complex.

As will be appreciated by those in the art, the systems used in the invention may take on a large number of different configurations. In general, there are three types of systems that can be used: (1) systems in which the target sequence itself is labeled with ETMs; (2) systems in which label probes directly hybridize to the target sequences; and (3) systems in which label probes are indirectly hybridized to the target sequences, for example through the use of amplifier probes.

In general, for all the systems outlined herein, both for nucleic acids and other target analytes, assay complexes that minimally comprise a target analyte and a capture binding ligand are provided. For nucleic acid target sequences, by "assay complex" herein is meant the collection of hybridization complexes comprising nucleic acids, including probes and targets, that contains at least one label (preferably an ETM in the electronic methods of the present invention) and thus allows detection. The composition of the assay complex depends on the use of the different probe component outlined herein. The assay complexes may also include label probes, capture extender probes, label extender probes, and amplifier probes, as outlined herein depending on the configuration used.

The assays are generally run under stringency conditions which allows formation of the label probe hybridization complex only in the presence of target. Stringency can be controlled by altering a step parameter that is a thermodynamic variable, including, but not limited to, temperature, formamide concentration, salt concentration, chaotropic salt concentration pH, organic solvent concentration, etc.

These parameters may also be used to control non-specific binding, as is generally outlined in U.S. Patent No. 5,681,697. Thus it may be desirable to perform certain steps at higher stringency conditions; for example, when an initial hybridization step is done between the target sequence and the label extender and capture extender probes. Running this step at conditions which favor specific binding can allow the reduction of non-specific binding.

The reactions outlined herein may be accomplished in a variety of ways, as will be appreciated by those in the art. Components of the reaction may be added simultaneously, or sequentially, in any order, with preferred embodiments outlined below. In addition, the reaction may include a variety of other reagents may be included in the assays. These include reagents like salts, buffers, neutral proteins, e.g. albumin, detergents, etc which may be used to facilitate optimal hybridization and detection, and/or reduce non-specific or background interactions. Also reagents that otherwise improve the efficiency of the assay, such as protease inhibitors, nuclease inhibitors, anti-microbial agents, etc., may be used, depending on the sample preparation methods and purity of the target.

Accordingly, biochips, with covalently attached capture binding ligands (e.g. capture probes) are incorporated into the cartridges of the invention and then fitted into the stations of the multiplexing devices of the invention for running assays.

In a preferred embodiment, the biochips are attached to the rest of the cartridge in a wide variety of ways. In one embodiment, the biochip is made directly on a portion of the cartridge and is thus incorporated into the system. Alternatively, as outlined herein, when the biochip is formulated on a different substrate than the remainder of the cartridge, there are a variety of attachment mechanisms that can be used, depending on the composition and configuration of the two substrates. For example, when the biochip is formulated on printed circuit board material, there can be "pins" or "rods" that are inserted into holes, with subsequent fusion (for example, using solvents or heat). Similarly, surface-to-surface heat or solvent fusion may be done. Alternatively, adhesives can be used to glue the two together. Similarly, these techniques can be used with additional sealing components such as gaskets. Alternatively, the biochip may "snap" into the cartridge, using components such as molded plastic snapping devices.

Holders for the cartridges may be provided for loading with samples, prior to loading the cartridges into the stations of the device. In general, as will be appreciated by those in the art, the holders may be configured in a wide variety of ways, depending on the configuration of the cartridges and caps, if present. For example, holders that align cartridges such that standard reagent handling tools can be used are preferred. As shown in the Figures, holders that allow the use of multichannel pipettemen or robotic systems based on 96 well formats are preferred. The holders may also include the caps, positioned for easy use, or reagents and/or buffer components. In general, the holders are fabricated out of materials resistant to the chemicals and reagents used in the assays.

The cartridges of the invention are designed to be inserted into stations in a multiplexing device. As will be appreciated by those in the art and described below, the devices of the invention can take on a wide variety of conformations, depending on the desired components, the end use, the ultimate desired size of the instrument, etc.

Each multiplexing device has a number of different stations into which the cartridges are inserted. The cartridge/station pair can be configured in a variety of ways to include the use of "snap-in" locks, asymmetry such that the cartridge only fits into the device in a particular orientation, different size stations for different size cartridges (for example, some rare amount of tests may require special handling and the machines may be designed with special stations for these tests). This embodiment may also utilize electronic sensors that detect the presence or absence of a cartridge, or whether the cartridge is correctly positioned.

In general, the number of stations per device will vary with the desired use. Preferred embodiments utilize at least two or three stations, with at least 5-100 being preferred, and from about 25-50 being particularly preferred, with 48 being especially preferred. In general, the devices are laid out as a matrix, with columns and rows of stations.

As outlined herein, each station can have a number of different functional components, including, but not limited to, interconnects to electronic components, thermocontrollers, signaling systems, sensors for leak detection, alphanumeric displays, and detectors.

As the biochip relies on electrodes for detection, the stations should comprise matching interconnects for the biochip, to allow electronic communication between the chip and the device.

In a preferred embodiment, each station comprises an individual thermal controller. Thermal controller" or "thermocontroller" in this context includes elements that can both heat and cool the cartridges and thus the samples in the cartridges as well. In general, given the size and function of the systems, it is desirable to utilize small, fast thermocontrollers. There are a wide variety of known suitable thermocontrollers, including Peltier systems.

In general, the thermocontroller should be able to heat/cool samples ranging from 0 to about 1000°C and at a rate ranging from 0.01°C/sec to 10°C/sec.

It should be noted that a thermocontroller can be used after an assay to destroy the biological material in the cartridge. That is, it is frequently desirable to minimize the exposure of health care workers and lab workers to potentially dangerous samples, and to facilitate the disposal of these materials. The thermocontroller can be used to heat the spent sample at extreme temperatures for some period of time in order to kill or destroy the sample. In addition, heating in conjunction with the addition of other generally harsh reagents (strong acid, strong base, etc.) can also be used. Furthermore, in some embodiments, an RF antennae is used to generate plasma that is pumped into the chamber after fluid evacuation to destroy all biological material.

In one embodiment, rather than each station comprising an individual thermal controller, sets (for example, rows or columns) of the stations share a thermal controller. In an alternative embodiment, the multiplexing device comprises a single thermal controller.

In a preferred embodiment, the devices of the invention include a "Stat Slot", where a cartridge can be put in and read right away at one station, rather than run as a sequence. In general, the temperature at this station may be preset

In a preferred embodiment, the stations of the device include signaling systems. For example, a system of lights, particularly colored lights, at each station can be used to indicate the status of the cartridge or the assay: cartridge present or absent, assay in progress, error, assay completed, etc. In addition, the configuration of the lights may be the code (particularly for color blind people); two lights' for cartridge in, flashing lights for assay finished, etc. Again, these signaling systems may be at each station or at sets of stations.

In a preferred embodiment, the devices of the invention including an alphanumeric display to allow the display of data or other information. For example, this display may be used In conjunction with a barcode reader, described below, to show the operator which cartridge was inserted (e.g. the HIV panel, the HCV panel, the infectious disease panel, the breast cancer SNP panel, etc.), or other data about the cartridge (lot or batch number, etc.). In addition, the display can be used to give the operator the test results, etc. As for the signaling systems, a display can be at each station, or there may be displays for sets of stations or for the whole device.

In a preferred embodiment, each station of the device may be configured to allow electrophoresis or dielectrophoresis on the biochip. That is, as is generally described in WO99/67425, there may be additional electrodes or electronic components to allow the concentration and/or movement of analytes to the surface of the array.

Similarly, as is described in WO99/67425, the electrophoresis or dielectrophoresis electrodes may be contained on the biochip.

In a preferred embodiment, the device (or alternatively, each station) comprises a barcode reader to read a corresponding barcode on the cartridge. These barcodes may be used for a wide variety of purposes, including, but not limited to, identifying the sample (e.g. patient number or code), the test being done, the batch number of the chip, calibration information, assay protocols including cycle time, signal processing requirements, etc.

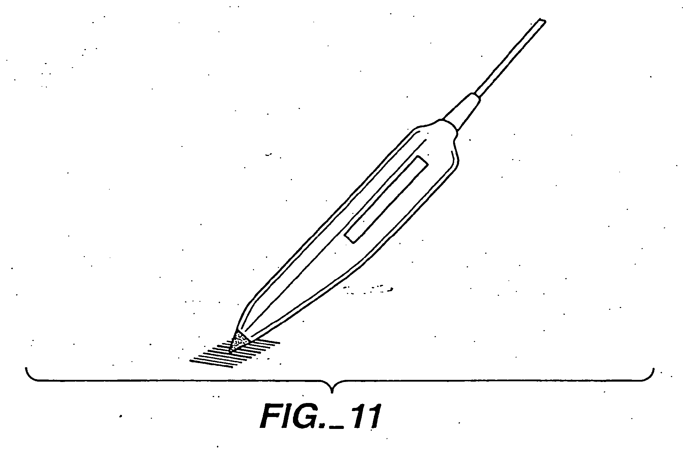

The device of Figure 11 may have:
Bar coded 'reference' sheet, stored in tray under unit, with bar coded protocols, bar coded well and slot id's, bar coded commands (e.g. 'cancel', 'done', etc.).
Standard bar code wand (preferably with built-in decoder), housed in the tray (hence hidden when not in use).
Serial (RS-232/485) interface (preferred), or 'keyboard wedge'.
Multi-code support (Code 39, Code 128, etc.).
Bar code on chip carrier (1 code per '8 pack'), identifying test, batch, etc.
Peel off labels, with same code as on carrier, with each '8 pack'.

### Bar code usage scenario:

User fills '8-pack' (all 8, or partially) from a 96 well plate, or from individual sample containers (PCR tubes, vaccutainers, etc.).
Pull out tray (with bar code reference sheet) and grab wand.
Scan 'start' code.
Scan protocol code from sheet (will remain in effect until 'done' is scanned).
Scan chip code from carrier (will remain in effect until 'done' is scanned).
For each cartridge, user will
   insert the cartridge in an open slot. Unit senses new chip automatically
   scan the sample ID by either
   scanning 96 well plate bar code from plate and well code from sheet
   or scanning unique sample ID from container
   or scanning 'no ID' from reference sheet.
Scan 'done' code. The protocol can now be started on these cartridges.

### Bar code concept benefits:

No keyboard entry (all-routine setup can be entered via bar coding).
All, routine entries accomplished while in front of unit (no going back and forth between PC & Hydra).
All bar code entries done from small, flat surface in front of unit.
No need to label each chip or each slot (which would compromise appearance).
Uses small unobtrusive bar code wand, hidden when not in use.
Is flexible with respect to sample container (tube, 96 well plate, etc.), chip usage (by row of 8, or by individual chip), and lab bar coding method.

In addition, the barcode can be used to control the instrument. For example, instrument control may be through the use of a keyboard, a mouse or a barcode reader. Thus, for example, there may be barcodes on the cartridges to indicate the identity of the chip, but also on a card to scan for starting the assay, stopping the assay, downloading the data, etc. In a preferred embodiment, the card of barcode commands are found in the drawer of the device, outlined herein.

In a preferred embodiment, each station comprises a memory chip reader. Again, in this embodiment, each cartridge comprises a memory chip, that can have sample information (e.g. patient number or code), the test being done, the batch number of the chip, calibration information, assay protocols, etc.), or what the user interface looks like (for example, not a number but "HIV positive"), etc.

In a preferred embodiment, each station comprises a memory chip writer to add information to the cartridge, such as what test was done, the date, the results, etc.

In a preferred embodiment, each station has encryption components in conjunction with the cartridge, to encrypt patient information. That is, there is a growing concern regarding the confidentiality of patient information, particularly with regard to employment and insurance issues. Thus for example, in some embodiments, the devices of the invention will not allow the operator to know the results of the test Rather, the output will be a confirmation that the test was performed correctly and a viable answer received, but nothing as to the actual test being done or the results. The test results themselves, in addition to the patient information, can be encrypted and sent to a remote location as outlined below for processing, decryption or storage.

In a preferred embodiment, the device may include drawers or storage compartments to allow the storage of reagents, cartridges, caps, holders, pipettemen, etc.

In a preferred embodiment, for example, when fluorescence dyes are used in the assays, fluorescent readers are used. In one embodiment, the device comprises a reader at each station. Alternatively, in a preferred embodiment, the device comprises a single reader that is moved, either by moving the reader or by moving the stations to a single reader within the device. Thus, in some embodiments, there are motors, pulleys, cords, etc. to allow the movement of stations, cartridges or readers.

In a preferred embodiment, the devices of the invention comprise liquid handling components, including components for loading and unloading fluids at each station or sets of stations. The liquid handling systems can include robotic systems comprising any number of components. In addition, any or all of the steps outlined herein may be automated; thus, for example, the systems may be completely or partially automated.

As will be appreciated by those in the art, there are a wide variety of components which can be used, including, but not limited to, one or more robotic arms; plate handlers for the positioning of microplates; holders with cartridges and/or caps; automated lid or cap handlers to remove and replace lids for wells on non-cross contamination plates; tip assemblies for sample distribution with disposable tips; washable tip assemblies for sample distribution; 96 well loading blocks; cooled reagent racks; microtitler plate pipette positions (optionally cooled); stacking towers for plates and tips; and computer systems.

Fully robotic or microfluidic systems include automated liquid-, particle-, cell- and organism-handling including high throughput pipetting to perform all steps of screening applications. This indudes liquid, particle, cell, and organism manipulations such as aspiration, dispensing, mixing, diluting, washing, accurate volumetric transfers; retrieving, and discarding of pipet tips; and repetitive pipetting of identical volumes for multiple deliveries from a single sample aspiration. These manipulations are cross-contamination-free liquid, particle, cell, and organism transfers. This instrument performs automated replication of microplate samples to filters, membranes, and/or daughter plates, high-density transfers, full-plate serial dilutions, and high capacity operation.

In a preferred embodiment, chemically derivatized particles, plates, cartridges, tubes, magnetic particles, or other solid phase matrix with specificity to the assay components are used. The binding surfaces of microplates, tubes or any solid phase matrices include non-polar surfaces, highly polar surfaces, modified dextran coating to promote covalent binding, antibody coating, affinity media to bind fusion proteins or peptides, surface-fixed proteins such as recombinant protein A or G. nucleotide resins or coatings, and other affinity matrix are useful in this invention.

In a preferred embodiment, platforms for multi-well plates, multi-tubes, holders, cartridges, minitubes, deep-well plates, microfuge tubes, cryovials, square well plates; filters, chips, optic fibers, beads, and other solid-phase matrices or platform with various volumes are accommodated on an upgradable modular platform for additional capacity. This modular platform includes a variable speed orbital shaker, and multi-position work decks for source samples, sample and reagent dilution, assay plates, sample and reagent reservoirs, pipette tips, and an active wash station.

In a preferred embodiment, thermocycler and thermoregulating systems are used for stabilizing the temperature of the heat exchangers such as controlled blocks or platforms to provide accurate temperature control of incubating samples from 4°C to 100°C; this is in addition to or in place of the station thermocontrollers.

In a preferred embodiment, interchangeable pipet heads (single or multi-channel) with single or multiple magnetic probes, affinity probes, or pipetters robotically manipulate the liquid, particles, cells, and organisms. Multi-well or multi-tube magnetic separators or platforms manipulate liquid, particles, cells, and organisms in single or multiple sample formats.

In some embodiments, for example when electronic detection is not done, the instrumentation will include a detector, which can be a wide variety of different detectors, depending on the labels and assay. In a preferred embodiment, useful detectors include a microscope(s) with multiple channels of fluorescence; plate readers to provide fluorescent, ultraviolet and visible spectrophotometric detection with single and dual wavelength endpoint and kinetics capability, fluroescence resonance energy transfer (FRET), luminescence, quenching, two-photon excitation, and intensity redistribution; CCD cameras to capture and transform data and images into quantifiable formats; and a computer workstation.

These instruments can fit in a sterile laminar flow or fume hood, or are enclosed, self-contained systems, for cell culture growth and transformation in multi-well plates or tubes and for hazardous operations. The living cells will be grown under controlled growth conditions, with controls for temperature, humidity, and gas for time series of the live cell assays. Automated transformation of cells and automated colony pickers will facilitate rapid screening of desired cells.

Flow cytometry or capillary electrophoresis formats can be used for individual capture of magnetic and other beads, particles, cells, and organisms.

The flexible hardware and software allow instrument adaptability for multiple applications. The software program modules allow creation, modification, and running of methods. The system diagnostic modules allow instrument alignment, correct connections, and motor operations. The customized tools, labware, and liquid, particle, cell and organism transfer patterns allow different applications to be performed. The database allows method and parameter storage. Robotic and computer interfaces allow communication between instruments.

In a preferred embodiment, the robotic apparatus includes a central processing unit which communicates with a memory and a set of input/output devices (e.g., keyboard, mouse, monitor, printer, etc.) through a bus. Again, as outlined below, this may be in addition to or in place of the CPU for the multiplexing devices of the invention. The general interaction between a central processing unit, a memory, input/output devices, and a bus is known in the art. Thus, a variety of different procedures, depending on the experiments to be run, are stored in the CPU memory.

These robotic fluid handling systems can utilize any number of different reagents, including buffers, reagents, samples, washes, assay components such as label probes, etc.

In a preferred embodiment, the devices of the invention include sensors for leak detection. These are generally of two types; either electronic measurements of resistance or the spiking of the assay with optical or detectable tags. This may be particularly important in some embodiments where biohazardous materials or caustic chemicals are being tested.

In a preferred embodiment, the devices of the invention comprise a device board that can be used to do a variety of analyses, including signal processing, digital lock-in, comprising logic circuits, etc., as outlined herein.

In a preferred embodiment, the systems of the invention comprise a processor (CPU). This can be physically contained within the apparatus itself, can be connected via a cable, or can be connected using wireless technology. There can be one or more per device.

In a preferred embodiment, the devices of the invention include a localization device, such as a Global Positioning System (GPS) as are known in the art This may find particular use in agriculture and biowarfare uses, as well as remote diagnosis of problems.

In a preferred embodiment, the devices of the invention include components for the communication of data, assay results, patient information, etc. to an off-device location. Thus, for example, one or more modems (including both telephone and cable modems), internet cards, infrared ports, etc, may be included in the devices to allow the transmission of data and other relevant information (barcode information, assay conditions and protocols, operator identification, time stamps, etc.) to a remote location such as a general information repository, hospitals, doctor's offices, epidemiology centers, pharmacies, government centers, insurance providers, etc.

In a preferred embodiment, the devices of the invention include components for wireless communication systems, to allow this transmission of data in the absence of physical electronic or communications connections. In addition, wireless receivers can be included.

Samples (either raw samples or treated samples (e.g. amplified, purified, etc.)) are loaded into the cartridges of the invention, optional caps are put on, and the cartridges loaded into a station of the device. Additional reagents are added as necessary, and assay complexes formed.

## Claims

1. A cartridge comprising a biochip, the cartridge comprising:
a) a reaction chamber comprising:
i) a substrate comprising an array of electrodes, each comprising:
A) a self-assembled monolayer; and
B) a capture binding ligand;
ii) an inlet port for the introduction of reagents wherein the inlet port allows the introduction of reagents into the bottom of the reaction chamber, the reaction chamber further comprising an outlet port at the top of the reaction chamber to minimize the introduction or retention of air bubbles upon introduction of reagents; and
b) interconnections to allow the electrical connection of said electrodes to a processor.

2. A cartridge according to claim 1, said outlet port including a semi-permeable membrane.

3. A cartridge according to claim 1 or claim 2 wherein said capture binding ligands comprise nucleic acids.

4. A cartridge according to claim 1 or claim 2 wherein said reaction chamber further comprises a gasket to retain fluid in contact with said array.

5. A cartridge according to claim 1 or claim 2 wherein said reaction chamber further comprises an outlet port.

6. A cartridge according to claim 1 or claim 2 wherein said array is on one surface of said substrate.

7. A cartridge according to claim 1 or claim 2 wherein two surfaces of said substrate each comprise an array.

8. A cartridge according to claim 1 or claim 2 further comprising a cap comprising at least one storage well comprising assay reagents.

9. A cartridge according to claim 1 wherein said inlet port includes a valve comprising a semi-permeable membrane.

10. A cartridge according to claim 2, wherein said semi-permeable membrane preferentially allows the escape of gas and retains sample fluid.

11. A cartridge according to claim 2, wherein said semi-permeable membrane comprises teflon.

12. A cartridge according to claim 2 or claim 9, wherein said semi-permeable membrane comprises Gortex^{™}.

13. A cartridge according to claim 1 or claim 2 wherein said capture binding ligands comprise proteins.

14. A cartridge according to claim 1, wherein said outlet port vents to a waste storage well or an external surface of the chip or cartridge.

15. A cartridge according to claim 1, wherein said outlet port vents back to said inlet port.

16. A cartridge according to claim 1, wherein said reaction chamber is configured to allow mixing of a sample.

17. A cartridge according to claim 1, wherein said inlet port further comprises at least one channel positioned to maximize the mixing of said sample.

18. A cartridge according to claim 1, wherein said reaction chamber further comprises at least one weir positioned to maximize the mixing of said sample.

19. A cartridge according to claim 1, wherein said self-assembled monolayer comprises an insulator.

20. A cartridge according to claim 1, wherein said self-assembled monolayer comprises a conductive oligomer.

21. A cartridge according to claim 1, wherein at least one of said electrodes comprises gold.

22. A cartridge according to claim 21, wherein said self-assembled monolayer comprises a thiol-containing monolayer forming species.

23. A cartridge according to claim 1, wherein said substrate comprises a printed circuit board.

## Patentansprüche

1. Kartusche, umfassend einen Biochip, wobei die Kartusche Folgendes umfasst:
a) eine Reaktionskammer, umfassend:
i) ein Substrat, welches eine Anordnung an Elektroden umfasst, die jeweils wiederum Folgendes umfassen:
A) eine selbstorganisierte Monoschicht; und
B) einen Einfang-Bindungsliganden;
ii) eine Einlassöffnung zur Einbringung von Reagenzien, worin die Einlassöffnung die Einbringung der Reagenzien in den Boden der Reaktionskammer ermöglicht, wobei die Reaktionskammer ferner eine Auslassöffnung am oberen Teil der Reaktionskammer umfasst, um das Einbringen oder das Zurückhalten von Luftblasen bei der Einbringung der Reagenzien zu minimieren; und
b) Verbindungsleitungen, um die elektrische Verbindung der Elektroden mit einem Prozessor zu ermöglichen.

2. Kartusche nach Anspruch 1, worin die Auslassöffnung eine halbdurchlässige Membran umfasst.

3. Kartusche nach einem der Ansprüche 1 oder 2, worin der Einfang-Bindungsligand Nukleinsäuren umfasst.

4. Kartusche nach einem der Ansprüche 1 oder 2, worin die Reaktionskammer ferner eine Dichtung zum Halten des Fluids in Kontakt mit der Anordnung umfasst.

5. Kartusche nach einem der Ansprüche 1 oder 2, worin die Reaktionskammer weiters eine Auslassöffnung umfasst.

6. Kartusche nach einem der Ansprüche 1 oder 2, worin sich die Anordnung auf einer Oberfläche des Substrats befindet.

7. Kartusche nach einem der Ansprüche 1 oder 2, worin zwei Oberflächen des Substrats jeweils eine Anordnung umfassen.

8. Kartusche nach einem der Ansprüche 1 oder 2, weiters umfassend einen Verschlussdeckel, welcher zumindest einen Versuchsreagenzien enthaltenden Speicherwell aufweist.

9. Kartusche nach Anspruch 1, worin die Einlassöffnung ein Ventil mit einer halbdurchlässigen Membran umfasst.

10. Kartusche nach Anspruch 2, worin die halbdurchlässige Membran vorzugsweise den Austritt von Gas und das Halten von Probenfluid ermöglicht.

11. Kartusche nach Anspruch 2, worin die halbdurchlässige Membran Teflon umfasst.

12. Kartusche nach einem der Ansprüche 2 bis 9, worin die halbdurchlässige Membran Gore-Tex^{™} umfasst.

13. Kartusche nach einem der Ansprüche 1 oder 2, worin die Einfang-Bindungsliganden Proteine umfassen.

14. Kartusche nach Anspruch 1, worin die Auslassöffnung in einen Abfallspeicherwell oder auf eine Außen-Oberfläche des Chips oder der Kartusche entlüftet.

15. Kartusche nach Anspruch 1, worin die Auslassöffnung wieder zurück zur Einlassöffnung entlüftet.

16. Kartusche nach Anspruch 1, worin die Reaktionskammer derart aufgebaut ist, dass das Mischen einer Probe ermöglicht wird.

17. Kartusche nach Anspruch 1, worin die Einlassöffnung ferner zumindest einen Kanal umfasst, der zur Maximierung der Mischung der Probe angeordnet ist.

18. Kartusche nach Anspruch 1, worin die Reaktionskammer weiters zumindest einen Überlauf enthält, der zur Maximierung der Mischung der Probe platziert ist.

19. Kartusche nach Anspruch 1, worin die selbstorganisierte Monoschicht einen Isolator umfasst.

20. Kartusche nach Anspruch 1, worin die selbstorganisierte Monoschicht ein leitendes Oligomer umfasst.

21. Kartusche nach Anspruch 1, worin zumindest eine der Elektroden Gold umfasst.

22. Kartusche nach Anspruch 21, worin die selbstorganisierte Monoschicht eine thiol-enthaltende Monoschicht ausbildende Species umfasst.

23. Kartusche nach Anspruch 1, worin das Substrat eine gedruckte Leiterplatte umfasst.

## Revendications

1. Cartouche comprenant une biopuce, la cartouche comprenant:
a) une chambre de réaction comprenant:
i) un substrat comprenant une série d'électrodes, chacune comprenant:
A) une monocouche auto-assemblée; et
B) un ligand de liaison de capture;
ii) un orifice d'entrée pour l'introduction de réactifs où l'orifice d'entrée permet l'introduction des réactifs dans le fond de la chambre de réaction, la chambre de réaction comprenant de plus un orifice de sortie au sommet de la chambre de réaction pour minimiser l'introduction ou la rétention des bulles d'air lors de l'introduction des réactifs; et
b) des interconnexions pour permettre la connexion électrique desdites électrodes à un processeur.

2. Cartouche selon la revendication 1, ledit orifice de sortie comprenant une membrane semi-perméable.

3. Cartouche selon la revendication 1 ou la revendication 2, où lesdits ligands de liaison de capture comprennent des acides nucléiques.

4. Cartouche selon la revendication 1 ou la revendication 2, où ladite chambre de réaction comprend de plus une garniture pour retenir le fluide en contact avec ladite série.

5. Cartouche selon la revendication 1 ou la revendication 2, où ladite chambre de réaction comprend de plus un orifice de sortie.

6. Cartouche selon la revendication 1 ou la revendication 2, où ladite série est sur une surface dudit substrat.

7. Cartouche selon la revendication 1 ou la revendication 2, où deux surfaces dudit substrat forment chacune une série.

8. Cartouche selon la revendication 1 ou la revendication 2, comprenant de plus un capuchon comprenant au moins un puits de stockage comprenant des réactifs d'essai.

9. Cartouche selon la revendication 1, où ledit orifice d'entrée comprend une vanne comprenant une membrane semi-perméable.

10. Cartouche selon la revendication 2, où ladite membrane semi-perméable préférentiellement permet l'échappement des gaz et retient un flux d'échantillon.

11. Cartouche selon la revendication 2, où ladite membrane semi-perméable comprend du téflon.

12. Cartouche selon la revendication 2 ou la revendication 9, où ladite membrane semi-perméable comprend du Gortex^{™}.

13. Cartouche selon la revendication 1 ou la revendication 2, où lesdits ligands de liaison de capture comprennent des protéines.

14. Cartouche selon la revendication 1, où ledit orifice de sortie s'évente vers un puit de stockage de déchets où une surface externe de la puce ou de la cartouche.

15. Cartouche selon la revendication 1, où ledit orifice de sortie s'évente vers l'orifice d'entrée.

16. Cartouche selon la revendication 1 où ladite chambre de réaction est configurée pour permettre le mélange d'un échantillon.

17. Cartouche selon la revendication 1, où ledit orifice d'entrée comprend de plus au moins un canal placé pour maximiser le mélange dudit échantillon.

18. Cartouche selon la revendication 1, où ladite chambre de réaction comprend de plus au moins un barrage placé pour maximiser le mélange dudit échantillon.

19. Cartouche selon la revendication 1, où ladite monocouche auto-assemblée comprend un isolant.

20. Cartouche selon la revendication 1, où ladite monocouche auto-assemblée comprend un oligomère conducteur.

21. Cartouche selon la revendication 1, où au moins une desdites électrodes comprend de l'or.

22. Cartouche selon la revendication 21, où ladite monocouche auto assemblée comprend une espèce formant une monocouche contenant du thiol.

23. Cartouche selon la revendication 1, où ledit substrat comprend une planche de circuit imprimé.
